# EUROPÄISCHE PATENTSCHRIFT

(11) **EP 3 965 532 B1**
(45) Veröffentlichungstag und Bekanntmachung des Hinweises auf die Patenterteilung: **07.01.2026**
(21) Anmeldenummer: 21193746.1
(22) Anmeldetag: 30.08.2021
(51) Int. Cl.: H05B 6/14, H05B 6/36, B23P 11/02, B23B 31/117

(54) **INDUKTIONSHEIZEINHEITEN-EINSTELLVORRICHTUNG UND EINSTELLVERFAHREN ZU EINER EINSTELLUNG ZUMINDEST EINES FELDFORMERELEMENTS EINER INDUKTIONSHEIZEINHEIT**
INDUCTION HEATING UNIT ADJUSTING DEVICE AND ADJUSTMENT METHOD FOR ADJUSTING AT LEAST ONE FIELD FORMING ELEMENT OF AN INDUCTION HEATING UNIT
DISPOSITIF DE RÉGLAGE POUR UNITÉS DE CHAUFFAGE À INDUCTION ET PROCÉDÉ DE RÉGLAGE DESTINÉ À UN RÉGLAGE D'AU MOINS UN ÉLÉMENT DE CONFIGURATEUR DE CHAMP D'UNE UNITÉ DE CHAUFFAGE À INDUCTION

(30) Priorität: 03.09.2020 DE 102020123070
(43) Veröffentlichungstag der Anmeldung: 09.03.2022
(73) Patentinhaber: E. Zoller GmbH & Co. KG Einstell- und Messgeräte, 74385 Pleidelsheim (DE)
(72) Erfinder: Zoller, Alexander, 74385 Pleidelsheim (DE)
(74) Vertreter: Daub, Thomas

(56) Entgegenhaltungen:
- DE-A1- 102005 014 984
- DE-U1- 202007 000 870
- US-A1- 2001 054 471
- ANONYMOUS: "Risiken und Chancen des Einsatzes von RFID-Systemen", 1 January 2005 (2005-01-01), pages 1 - 118, XP055713384, Retrieved from the Internet <URL:https://www.bsi.bund.de/SharedDocs/Downloads/DE/BSI/ElekAusweise/RFID/RIKCHA_barrierefrei_pdf.pdf?__blob=publicationFile&v=2> [retrieved on 20200709]

## Beschreibung

### Stand der Technik

Die Erfindung betrifft eine Induktionsheizeinheiten-Einstellvorrichtung nach dem Oberbegriff des Anspruchs 1, eine Induktionsheizeinheit nach dem Anspruch 8 und ein Einstellverfahren nach dem Oberbegriff des Anspruchs 9.

Es ist bereits eine Induktionsheizeinheiten-Einstellvorrichtung zu einer Einstellung zumindest einer Feldform eines Wechselfelds einer Induktionsspule einer Induktionsheizeinheit, mit einer Feldformeinheit, welche dazu vorgesehen ist, das durch die Induktionsspule erzeugte Wechselfeld zu formen und/oder abzuschirmen, umfassend zumindest ein Feldformerelement und eine Feldformeraufnahmeeinheit, welche dazu vorgesehen ist, das Feldformerelement in und/oder an der Induktionsheizeinheit zu haltern, vorgeschlagen worden.

DE 20 2007 000870 U1 (ZOLLER GMBH & CO KG [DE]) 5. April 2007 (2007-04-05) beschreibt Eine Werkzeugeinspannvorrichtung zum thermischen Ein und/oder Ausspannen von Werkzeugen in ein bzw. aus einem Schrumpffutter, mit einer Induktionsheizeinheit zum thermischen Aufweiten des Schrumpffutters und mit einer Abschirmeinheit.

DE 10 2005 014984 A1 (FRANZ HAIMER MASCHB KG [DE]) 5. Oktober 2006 (2006-10-05) beschreibt eine Induktionsspulen-Baueinheit zum Erwärmen eines eine zentrische Aufnahmeöffnung für einen Schaft eines Rotationswerkzeugs enthaltenden, frei endenden Hülsenabschnitt eines Werkzeughalters, der den gleichachsig zu einer Drehachse des Werkzeughalters in der Aufnahmeöffnung sitzenden Schaft des Werkzeugs im Presssitz hält und bei Erwärmung freigibt.

Die Aufgabe der Erfindung besteht insbesondere darin, eine gattungsgemäße Vorrichtung mit vorteilhaften Eigenschaften hinsichtlich einer Einstellung der Feldform des Wechselfelds der Induktionsspule einer Induktionsheizeinheit bereitzustellen. Die Aufgabe wird erfindungsgemäß durch die Merkmale der Patentansprüche 1, 8 und 9 gelöst, während vorteilhafte Ausgestaltungen und Weiterbildungen der Erfindung den Unteransprüchen entnommen werden können.

### Vorteile der Erfindung

Die Erfindung geht aus von einer, insbesondere manuell bedienbaren, Induktionsheizeinheiten-Einstellvorrichtung zu einer, vorzugsweise zumindest teilweise manuellen, Einstellung zumindest einer Feldform eines Wechselfelds, insbesondere einer Magnetfeldform eines Induktionsmagnetfelds, einer Induktionsspule einer Induktionsheizeinheit, mit einer Feldformeinheit, insbesondere einer Feldumformeinheit, welche dazu vorgesehen ist, das durch die Induktionsspule erzeugte Wechselfeld, insbesondere das Induktionsmagnetfeld, vorzugsweise variabel, zu formen und/oder abzuschirmen, umfassend zumindest ein Feldformerelement, insbesondere Feldumformerelement, und eine, vorzugsweise ausschließlich manuell bedienbare, Feldformeraufnahmeeinheit, welche dazu vorgesehen ist, das Feldformerelement in und/oder an der Induktionsheizeinheit zu haltern.

Es wird vorgeschlagen, dass die Induktionsheizeinheiten-Einstellvorrichtung eine elektronische Sensoreinheit aufweist, welche dazu vorgesehen ist, einen Typ und/oder eine Position des durch die Feldformeraufnahmeeinheit in und/oder an der Induktionsheizeinheit gehalterten Feldformerelements zu sensieren, vorzugsweise zu detektieren, und ein elektronisches Messsignal auszugeben. Dadurch kann vorteilhaft eine optimale Feldformung, insbesondere für verschiedene, vorzugsweise verschieden geformte, von der Induktionsheizeinheit aufheizbare Werkzeugaufnahmen, ermöglicht werden. Vorteilhaft kann eine optimierte Einstellung der Feldformeinheit zur Erreichung der optimalen Feldform, insbesondere für verschiedene, vorzugsweise verschieden geformte, von der Induktionsheizeinheit aufheizbare Werkzeugaufnahmen, ermöglicht werden. Vorteilhaft kann eine, beispielsweise manuelle, von einer optimalen Einstellung abweichende Einstellung der Feldformerelemente, insbesondere eine Fehleinstellung der Feldformerelemente, erkannt werden, so dass vorzugsweise Fehleinstellungen der Feldformerelemente vermieden werden können. Vorteilhaft kann dadurch ein Induktionsheizvorgang optimiert werden, insbesondere indem ein Energieverbrauch für ein Aufheizen der Werkzeugaufnahme minimiert wird und/oder indem eine Erwärmung der Werkzeugaufnahme außerhalb eines Werkzeugaufnahmebereichs und/oder eine Erwärmung eines in dem Werkzeugaufnahmebereich angeordneten Werkzeugs minimiert werden kann. Vorteilhaft kann eine manuelle Einstellung der Feldformeinheit vereinfacht werden. Dadurch kann vorteilhaft eine hohe Bedienerfreundlichkeit erreicht werden. Das Wechselfeld ist vorzugsweise als ein, insbesondere hochfrequentes, (elektro-)magnetisches Wechselfeld, insbesondere als ein Induktionsmagnetfeld ausgebildet. Das Wechselfeld ist insbesondere dazu vorgesehen, in einer Werkzeugaufnahme, insbesondere in einem den Werkzeugaufnahmebereich der Werkzeugaufnahme umgebenden, vorzugsweise metallischen, bevorzugt ferro-, para-, oder diamagnetischen, Material Wirbelströme zu induzieren, welche das Material wiederum aufheizen.

Unter einer "Induktionsheizeinheit" soll insbesondere zumindest ein Teil, insbesondere eine Unterbaugruppe, eines Induktionsheizgeräts, insbesondere einer Ein- und/oder Ausschrumpfspannstation, verstanden werden, wobei insbesondere zusätzlich auch Zubehöreinheiten für das Induktionsheizgerät umfasst sein können, wie beispielsweise eine Sensoreinheit zur Messung einer Temperatur einer Werkzeugaufnahme oder zur Messung eines Energieverbrauchs während des Induktionsheizvorgangs. Insbesondere kann die Induktionsheizeinheit auch das gesamte Induktionsheizgerät umfassen. Insbesondere ist die Induktionsheizeinheit dazu vorgesehen, ein Ein- und/oder Ausschrumpfen von Werkzeugen in und/oder aus Werkzeugaufnahmen durch eine thermische Ausdehnung eines Aufnahmebereichs einer Werkzeugaufnahme zu ermöglichen. Insbesondere ist die Induktionsheizeinheit dazu vorgesehen, Werkzeugaufnahmen zu erhitzen. Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, insbesondere ein Schrumpffutter, bevorzugt ein Warmschrumpffutter, ausgebildet. Das Werkzeug ist insbesondere als ein Schaftwerkzeug, vorzugsweise als ein Rotations-Schaftwerkzeug, beispielsweise ein Bohrer, ein Fräser, ein Profilwerkzeug und/oder eine Reibahle ausgebildet. Unter einem "Einschrumpfen von Werkzeugen in und/oder aus Werkzeugaufnahmen" soll insbesondere ein Einspannen von Werkzeugen in Werkzeugaufnahmen verstanden werden, bei dem der Werkzeugaufnahmebereich der Werkzeugaufnahme zunächst thermisch aufgeweitet wird, dann ein Werkzeug in den Werkzeugaufnahmebereich eingeführt wird und wobei das Werkzeug schließlich nach einem Abkühlen der Werkzeugaufnahme durch einen Kraftschluss, insbesondere umfassend zumindest einen Reibschluss, in der Werkzeugaufnahme befestigt ist. Unter einem "Ausschrumpfen von Werkzeugen in und/oder aus Werkzeugaufnahmen" soll insbesondere ein Lösen von mittels eines Kraftschlusses, insbesondere eines Reibschlusses, in Werkzeugaufnahmen befestigten Werkzeugen verstanden werden, bei dem der Werkzeugaufnahmebereich der Werkzeugaufnahme thermisch soweit aufgeweitet wird, bis das in der Werkzeugaufnahme befestigte Werkzeug aus der Werkzeugaufnahme entnehmbar ist. Die Induktionsspule ist insbesondere als ein Induktor ausgebildet. Die Induktionsheizeinheit kann einen oder mehrere Induktoren aufweisen. Insbesondere ist der Induktor dazu vorgesehen, den Teil einer Werkzeugaufnahme zu erhitzen, welcher in einem um eine Spulenachse des Induktors angeordneten Inneren des Induktors angeordnet ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Unter einem "Feldformerelement" soll insbesondere ein Element verstanden werden, welches dazu vorgesehen ist, ein Magnetfeld, insbesondere Magnetfeldlinien eines Magnetfelds, gezielt zu leiten und/oder zu lenken. Insbesondere bildet das Feldformerelement ein Abschirmelement, vorzugsweise ein Induktionsmagnetfeld-Abschirmelement, aus. Insbesondere ist das Feldformerelement aus einem magnetisch leitenden (magnetische Permeabilität *µᵣ* > 1) und zugleich elektrisch nichtleitenden Material ausgebildet. Insbesondere ist das Feldformerelement zumindest teilweise aus einer ferrimagnetischen Oxidkeramik ausgebildet. Insbesondere bildet das Feldformerelement ein Ferritelement aus. Insbesondere ist das Feldformerelement zumindest teilweise aus einer weichmagnetischen ferrimagnetischen Oxidkeramik ausgebildet. Beispielsweise umfasst das Feldformerelement ein NiZn-Ferrit, ein MnZn-Ferrit und/oder einen Pulververbundwerkstoff auf Eisenoxydbasis. Darunter, dass die Feldformeinheit dazu vorgesehen ist das durch die Induktionsspule erzeugte Wechselfeld variabel zu formen soll insbesondere verstanden werden, dass die Feldformeinheit verschiedene Konfigurationen umfasst, welche verschiedene Feldformen ermöglicht. Insbesondere umfasst die Feldformeinheit verschiedene Anordnungen von beweglich gelagerten Feldformerelementen oder verschiedene austauschbare Feldformerelemente, welche dazu vorgesehen sind, verschieden große zentrale Öffnungen für in die Werkzeugaufnahmebereiche der Werkzeugaufnahmen einsteckende oder einzusteckende Werkzeuge, z.B. mit verschiedenen Schaftformen und/oder -größen, auszubilden. Vorzugsweise sind die Feldformerelemente in der Feldformeraufnahmeeinheit, insbesondere ausschließlich, manuell bewegbar und/oder, insbesondere ausschließlich, manuell aus der Feldformeraufnahmeeinheit austauschbar. Vorzugsweise ist die Induktionsheizeinheit, bevorzugt die Induktionsheizeinheiten-Einstellvorrichtung, frei von einem Antriebsmotor zu einer motorisierten Bewegung der Feldformerelemente. Unter einer "zumindest teilweise manuellen Einstellung einer Feldform" soll insbesondere verstanden werden, dass zumindest die Bewegung der Feldformerelemente, insbesondere innerhalb der Feldformeraufnahmeeinheit und/oder bei einem Einsetzen in die Feldformeraufnahmeeinheit und/oder einem Entnehmen aus der Feldformeraufnahmeeinheit, bei einer Einstellung der Feldform manuell erzeugt wird und/oder frei ist von jeglicher elektrischen Steuerung.

Die elektronische Sensoreinheit umfasst insbesondere zumindest einen Sensor, vorzugsweise zumindest einen aktiven Sensor. Insbesondere erzeugt der Sensor das elektronische Messsignal, beispielsweise basierend auf einem mechanischen Messprinzip, auf einem resistiven Messprinzip und/oder auf einem optischen Messprinzip. Darunter, dass die Sensoreinheit einen "Typ eines Feldformerelements" sensiert soll insbesondere verstanden werden, dass die Sensoreinheit sensiert und/oder detektiert, welches bestimmte Feldformerelement einer Auswahl von mehreren Feldformerelementen ("Wechselscheiben"), welche vorzugsweise (manuell) austauschbar in die Feldformeraufnahmeeinheit einsetzbar sind, in der Feldformeraufnahmeeinheit positioniert ist. Darunter, dass die Sensoreinheit eine "Position eines Feldformerelements" sensiert soll insbesondere verstanden werden, dass die Sensoreinheit sensiert und/oder detektiert, welche Position, insbesondere welche Drehposition und/oder welche Translationsposition, vorzugsweise welche Relativposition zu der Induktionsspule zumindest ein (manuell) beweglich in und/oder von der Feldformeraufnahmeeinheit gelagertes Feldumformerelement, insbesondere (manuell) translatorisch beweglich und/oder (manuell) rotatorisch beweglich in und/oder von der Feldformeraufnahmeeinheit gelagertes Feldumformerelement, vorzugsweise einer Mehrzahl von in der Feldformeraufnahmeeinheit angeordneten Feldformerelementen, momentan einnimmt. Das elektronische Messsignal ist insbesondere verschieden von einem Steuer- und/oder Regelsignal eines motorisierten Antriebs zu einem Antrieb von Feldformerelementen in der Feldformeraufnahmeeinheit.

Die elektronische Sensoreinheit, insbesondere der Sensor, kann zumindest teilweise oder vollständig an dem Feldformerelement angeordnet sein (z.B. als ein RFID-Element, als ein elektrisches Widerstandselement, o.dgl.). Alternativ oder zusätzlich kann die elektronische Sensoreinheit, insbesondere der Sensor, zumindest teilweise oder vollständig getrennt von dem Feldformerelement angeordnet sein (z.B. als ein von dem Feldformerelement überstrichenes Raster, als ein von dem Feldformerelement bedienter Druckschalter o. dgl.).

Ferner wird vorgeschlagen, dass die Induktionsheizeinheiten-Einstellvorrichtung eine Anzeigeeinheit aufweist, welche dazu vorgesehen ist, den Typ und/oder die Position des von der elektronischen Sensoreinheit überwachten und/oder sensierten, vorzugsweise detektierten, Feldformerelements auszugeben. Dadurch kann vorteilhaft eine optimale Feldformung, insbesondere für verschiedene, vorzugsweise verschieden geformte, von der Induktionsheizeinheit aufheizbare Werkzeugaufnahmen, ermöglicht werden. Vorteilhaft kann eine optimierte Einstellung der Feldformeinheit zur Erreichung der optimalen Feldform, insbesondere für verschiedene, vorzugsweise verschieden geformte, von der Induktionsheizeinheit aufheizbare Werkzeugaufnahmen, ermöglicht werden. Vorteilhaft kann eine hohe Bedienerfreundlichkeit erreicht werden. Insbesondere weist die Induktionsheizeinheiten-Einstellvorrichtung eine Steuer- und/oder Regeleinheit auf. Unter einer "Steuer- und/oder Regeleinheit" soll insbesondere eine Einheit mit zumindest einer Steuerelektronik, vorzugsweise einem Controller, verstanden werden. Unter einer "Steuerelektronik" soll insbesondere eine Einheit mit einer Prozessoreinheit, vorzugsweise einem Prozessor, und mit einer Speichereinheit, vorzugsweise einem Speichermedium, sowie mit einem in der Speichereinheit gespeicherten Betriebsprogramm verstanden werden. Die Steuer- und/oder Regeleinheit ist insbesondere dazu vorgesehen, das Messsignal zu empfangen, auszulesen, zu verarbeiten und/oder basierend auf dem Messsignal eine Anzeige der Anzeigeeinheit zu steuern. Die Steuer- und/oder Regeleinheit umfasst insbesondere eine Eingabeeinheit, z.B. eine Tastatur, ein Touchpad o.dgl. Die Eingabeeinheit ist vorzugsweise dazu vorgesehen, für einen Bediener eine Eingabemöglichkeit zu einer Eingabe beispielsweise einer Werkzeug-Werkzeugaufnahmen-Kombination, welche von der Induktionsheizeinheit ein- oder ausgeschrumpft werden soll, bereitzustellen. Insbesondere über die Werkzeug-Werkzeugaufnahmen-Kombination ermittelt die Steuer- und/oder Regeleinheit einen optimalen Typ des Feldformerelements oder eine optimale Position des/der Feldformerelements/Feldformerelemente.

Insbesondere ist die Anzeige der Anzeigeeinheit davon abhängig und/oder von der Steuer- und/oder Regeleinheit entsprechend gesteuert, dass sie eine Übereinstimmung mit dem optimalen Typ des Feldformerelements oder der optimalen Position des/der Feldformerelements/Feldformerelemente anzeigt und/oder dass sie eine Abweichung von dem optimalen Typ des Feldformerelements oder der optimalen Position des/der Feldformerelements/Feldformerelemente anzeigt. Insbesondere ist die Eingabeeinheit dazu vorgesehen, für den Bediener eine Eingabemöglichkeit zu einer Eingabe eines vorgesehenen Typs von Feldformerelement oder einer vorgesehenen Position des/der Feldformerelements/Feldformerelemente bereitzustellen. Insbesondere führt die Steuer- und/oder Regeleinheit einen, vorzugsweise automatisierten, Abgleich zwischen einer vorgesehenen Position des Feldformerelements und/oder einem vorgesehenen Typ von Feldformerelement, welcher vorzugsweise aus der über die Eingabeeinheit vorgenommenen Eingabe ermittelt wird, und einer von der Sensoreinheit sensierten und/oder gemessenen momentanen Position des Feldformerelements und/oder einem von der Sensoreinheit sensierten und/oder gemessenen momentanen Typ des Feldformerelements durch. Vorzugsweise wird die Anzeige der Anzeigeeinheit durch die Steuer- und/oder Regeleinheit abhängig von einem Ergebnis dieses Abgleichs gesteuert. Vorzugsweise wird eine momentane Übereinstimmung als ein erstes Anzeigesignal der Anzeigeeinheit ausgegeben. Vorzugsweise wird eine momentane Abweichung als ein zweites Anzeigesignal der Anzeigeeinheit, welches verschieden ist von dem ersten Anzeigesignal der Anzeigeeinheit, ausgegeben. Vorzugsweise wechselt die Anzeige der Anzeigeeinheit bei einem Erkennen einer Änderung, welche einen Übergang von einer Abweichung zu einer Übereinstimmung oder einen Übergang von einer Übereinstimmung zu einer Abweichung zur Folge hat, bevorzugt in Echtzeit oder nahezu in Echtzeit, entsprechend zwischen den beiden Anzeigesignalen.

Wenn die Anzeigeeinheit zumindest ein Leuchtelement aufweist, kann vorteilhaft eine besonders einfache, deutliche und/oder benutzerfreundliche optimierte Einstellung der Feldformeinheit zur Erreichung der optimalen Feldform erreicht werden. Die Anzeigeeinheit umfasst vorzugsweise mehr als ein Leuchtelement. Insbesondere sind die unterschiedlichen Leuchtelemente dazu vorgesehen, verschiedene Positionen, die die beweglich gelagerten Feldformerelemente in der Feldformeraufnahmeeinheit einnehmen können, vorzugsweise verschiedene Standardpositionen für bestimmte typische Werkzeugaufnahmetypen und/oder - größen, anzuzeigen. Insbesondere sind die unterschiedlichen Leuchtelemente dazu vorgesehen, verschiedene Typen von Feldformerelementen, die in die Feldformeraufnahmeeinheit einsetzbar sind, vorzugsweise verschiedene Standardtypen für bestimmte typische Werkzeugaufnahmetypen und/oder - größen, anzuzeigen. Insbesondere ist/sind das/die Leuchtelement/e als Leuchtdiode (LED) ausgebildet. Insbesondere ist/sind das/die Leuchtelement/e an einem Gehäuse der Induktionsheizeinheit angeordnet. Insbesondere sind die Leuchtelemente in einer Reihe nebeneinander an dem Gehäuse der Induktionsheizeinheit angeordnet. Alternative Anordnungen außerhalb des Gehäuses der Induktionsheizeinheit oder eine Anzeige der Anzeigesignale über einen oder mehrere Bildschirme sind selbstverständlich ebenfalls denkbar.

Wenn außerdem die Anzeigeeinheit zumindest ein Farbwechselelement, insbesondere ein Farbwechselleuchtelement, vorzugsweise eine Farbwechsel-LED, aufweist, kann vorteilhaft eine besonders einfache, deutliche und/oder benutzerfreundliche optimierte Einstellung der Feldformeinheit zur Erreichung der optimalen Feldform erreicht werden. Beispielsweise kann das erste Anzeigesignal als ein grünes Leuchten des Farbwechselelements ausgebildet sein. Beispielsweise kann das zweite Anzeigesignal als ein rotes Leuchten des Farbwechselelements ausgebildet sein. Alternative Farbwahlen sind selbstverständlich denkbar. Außerdem ist alternativ oder zusätzlich denkbar, dass die Anzeigeeinheit Anzeigesignale in Form von Helligkeitsveränderungen der Anzeigeelemente oder in Form von verschiedenen durch die Anzeigeelemente erzeugten Blinksignalen ausgibt.

Zudem wird vorgeschlagen, dass die Anzeigeeinheit dazu vorgesehen ist, ein Abweichen von einem vorausgewählten Typ des Feldformerelements und/oder eine Abweichung von einer vorausgewählten Position des Feldformerelements mittels eines Abweichsignals anzuzeigen. Dadurch kann vorteilhaft eine besonders einfache, deutliche und/oder benutzerfreundliche optimierte Einstellung der Feldformeinheit zur Erreichung der optimalen Feldform ermöglicht werden. Das Abweichsignal ist insbesondere als das zweite Anzeigesignal ausgebildet. Der vorausgewählte Typ des Feldformerelements entspricht insbesondere dem über die Eingabe in die Eingabeeinheit ermittelten vorgesehenen Typ von Feldformerelement. Die vorausgewählte Position des Feldformerelements entspricht insbesondere der über die Eingabe in die Eingabeeinheit ermittelten vorgesehenen Position des Feldformerelements. Insbesondere ist das Farbwechselleuchtelement dazu vorgesehen, das Abweichsignal und/oder das zweite Anzeigesignal anzuzeigen.

Außerdem wird vorgeschlagen, dass die Anzeigeeinheit dazu vorgesehen ist, ein Übereinstimmen mit einem vorausgewählten Typ des Feldformerelements und/oder eine Übereinstimmung mit einer vorausgewählten Position des Feldformerelements mittels eines Übereinstimmungssignals anzuzeigen. Dadurch kann vorteilhaft eine besonders einfache, deutliche und/oder benutzerfreundliche optimierte Einstellung der Feldformeinheit zur Erreichung der optimalen Feldform ermöglicht werden. Das Übereinstimmungssignal ist insbesondere als das erste Anzeigesignal ausgebildet. Insbesondere ist das Farbwechselleuchtelement dazu vorgesehen, das Übereinstimmungssignal und/oder das erste Anzeigesignal anzuzeigen. Insbesondere ist ein identisches Leuchtelement, insbesondere Farbwechselleuchtelement, zu einer Anzeige des Abweichsignals und des Übereinstimmungssignals vorgesehen. Insbesondere ist jedes Leuchtelement, vorzugsweise jedes Farbwechselleuchtelement, genau einer von mehreren möglichen typischen Positionen der Feldformerelemente und/oder genau einem von mehreren möglichen typischen Typen von Feldformerelementen zugeordnet.

Des Weiteren wird vorgeschlagen, dass die elektronische Sensoreinheit dazu vorgesehen ist, einen, insbesondere manuellen, den Typ oder die Position des Feldformerelements beeinflussenden, Einstellvorgang zu überwachen und in Abhängigkeit von einer Übereinstimmung des Typs oder der Position des Feldformerelements mit der Vorauswahl, das Abweichsignal oder das Übereinstimmungssignal mittels des Farbwechselelements, insbesondere mittels des dem vorausgewählten Typ von Feldformerelement zugeordneten Farbwechselelements und/oder mittels der vorausgewählten Position des Feldformerelements, auszugeben. Dadurch kann vorteilhaft eine besonders einfache, deutliche und/oder benutzerfreundliche optimierte Einstellung der Feldformeinheit zur Erreichung der optimalen Feldform ermöglicht werden.

Wenn das Feldformerelement zumindest einen Teil einer Irisblende mit einer größenvariablen Irisöffnung ausbildet, kann vorteilhaft über die durch die elektronische Sensoreinheit überwachte Positionierung des Feldformerelements eine gewünschte Größe der Irisöffnung eingestellt werden. Vorteilhaft kann eine besonders einfache exakte Größeneinstellung der Irisöffnung ermöglicht werden. Vorteilhaft kann eine hohe Benutzerfreundlichkeit erreicht werden. Vorteilhaft kann eine optimale Feldformung durch die Irisblende für das Ein- und/oder Ausschrumpfen verschiedener Werkzeuge in und/oder aus verschiedenen Werkzeugaufnahmen erreicht werden. Insbesondere bilden die Feldformerelemente Lamellen eines Lamellenverschlusses aus, welche insbesondere analog zu einer Irisblende und/oder analog zu einem Zentralverschluss eines Fotoapparats angeordnet und relativ zueinander bewegbar sind. Insbesondere umfasst die Irisblende mehrere, beispielsweise vier, fünf, sechs, sieben oder acht, Lamellen, welche vorzugsweise mittels einer Mechanik gemeinsam nach innen oder außen drehbar sind. Insbesondere ist dabei jede Lamelle auf einer Achse gelagert. Vorzugsweise sind alle Lamellen über die Feldformeraufnahmeeinheit, insbesondere über ein Ringelement der Feldformeraufnahmeeinheit, miteinander verbunden, welches dazu vorgesehen ist, eine gemeinsame Bewegung der Lamellen zu erzeugen und/oder zu lenken. Insbesondere bilden die Lamellen gemeinsam die größenvariable Irisöffnung aus. Insbesondere ist die größenvariable Irisöffnung in einem von allen Lamellen der Feldformeinheit gebildeten Zentrum der Feldformeinheit angeordnet. Insbesondere entspricht eine Form der durch die Feldformerelemente gebildeten größenvariablen Irisöffnung einem Vieleck, dessen Eckenzahl vorzugsweise einer Anzahl an Feldformerelementen der Feldformeinheit entspricht.

Wenn, insbesondere alternativ zu der Irisblende, das Feldformerelement zumindest einen Teil einer Wechselscheibe einer Mehrzahl von auswechselbar in die Feldformeraufnahmeeinheit einsetzbaren und jeweils eine unterschiedlich große, insbesondere zentrale, Öffnung aufweisenden Wechselscheiben ausbildet, kann vorteilhaft über den durch die elektronische Sensoreinheit überwachten Typ des Feldformerelements eine gewünschte Größe der, insbesondere zentralen, Öffnung eingestellt werden. Vorteilhaft kann eine besonders einfache exakte Größeneinstellung der, insbesondere zentralen, Öffnung ermöglicht werden. Vorteilhaft kann eine hohe Benutzerfreundlichkeit erreicht werden. Vorteilhaft kann eine optimale Feldformung durch die Wahl passender Wechselscheiben für das Ein- und/oder Ausschrumpfen verschiedener Werkzeuge in und/oder aus verschiedenen Werkzeugaufnahmen erreicht werden. Insbesondere bilden die Feldformerelemente flache, vorzugsweise ringscheibenförmige, Wechselscheiben aus, welche vorzugsweise an einem äußeren Rand von einem, insbesondere das Ringelement ausbildenden, Kunststoffring umgeben sind.

Wenn die elektronische Sensoreinheit ein Potentiometer, insbesondere zu einer Erfassung einer jeweiligen Momentanposition des Feldformerelements in der Feldformeraufnahmeeinheit und/oder zur Erfassung eines momentan in der Feldformeraufnahmeeinheit angeordneten Typs von Feldformerelement, umfasst, kann vorteilhaft eine zuverlässige und/oder kostengünstige Ausgestaltung der elektronischen Sensoreinheit erreicht werden, welche zudem vorzugsweise eine hohe Lebensdauer besitzt und/oder eine hohe Zykluszahl erlaubt. Insbesondere kontaktiert ein Abgriff des Potentiometers das Feldformerelement, um über eine Messung eines momentan über das Potentiometer abfallenden Widerstandswerts die Momentanposition des bewegbaren Feldformerelements in der Feldformeraufnahmeeinheit und/oder einen Typ des momentan in die Feldformeraufnahmeeinheit eingesetzten Feldformerelements zu ermitteln. Insbesondere bildet das Potentiometer einen elektronischen Leitungskontakt mit dem in der Feldformeraufnahmeeinheit gelagerten Feldformerelement aus. Vorzugsweise bildet das Potentiometer einen Gleitkontakt mit dem in der Feldformeraufnahmeeinheit beweglich gelagerten Feldformerelement aus.

Alternativ wird vorgeschlagen, dass die elektronische Sensoreinheit eine Schalter- und/oder Rasterkodierung, insbesondere zu einer Erfassung einer jeweiligen Momentanposition des Feldformerelements in der Feldformeraufnahmeeinheit, umfasst. Dabei weist insbesondere zumindest ein Feldformerelement, vorzugsweise jedes Feldformerelement, und/oder ein das Feldformerelement und/oder die Feldformerelemente umfassendes Element, bevorzugt das Ringelement, eine mechanische Kodierung auf. Die mechanische Kodierung ist vorzugsweise in Form von Nocken oder Löchern ausgebildet. Die Induktionsheizeinheit umfasst insbesondere einen Mehrfach(druck)schalter, beispielsweise einen Vierfach(druck)schalter, oder mehrere, beispielsweise vier, Einzelschalter, insbesondere Einzel-Druckschalter, welche vorzugsweise dazu vorgesehen sind, mit der mechanischen Kodierung wechselzuwirken, bevorzugt die mechanische Kodierung abzufragen. Beispielsweise ist abhängig von der Position eines Feldformerelements ein Teil der diesem Feldformerelement zugeordneten Schalter durch die diesem Feldformerelement zugehörige mechanische Kodierung aktiviert, d.h. insbesondere gedrückt. Beispielsweise umfasst eine Feldformeinheit mit Feldformerelementen ("Irislamellen"), die an fünf verschiedene ausgezeichnete Positionen verschiebbar sind, vier Einzel-Druckschalter. In der ersten ausgezeichneten Position des Feldformerelements (z.B. der Position mit der kleinsten Irisöffnung) ist das Feldformerelement so positioniert, dass es keinen der Einzel-Druckschalter drückt (Signal 0). In der zweiten ausgezeichneten Position des Feldformerelements (z.B. der Position mit der zweitkleinsten Irisöffnung) ist das Feldformerelement so positioniert, dass es genau einen der Einzel-Druckschalter drückt (Signal 1). In der dritten ausgezeichneten Position des Feldformerelements (z.B. der Position mit der drittkleinsten Irisöffnung) ist das Feldformerelement so positioniert, dass es genau zwei der Einzel-Druckschalter drückt (Signal 2), usw.

Beispielsweise ist abhängig von dem Typ eines Feldformerelements ein Teil der diesem Feldformerelement zugeordneten Schalter durch die diesem Feldformerelement zugehörige mechanische Kodierung aktiviert, d.h. insbesondere gedrückt. Beispielsweise umfasst eine Feldformeinheit mit fünf verschiedenen (wechselbaren) Typen von Feldformerelementen ("Wechselscheiben") vier Einzel-Druckschalter. Das erste der fünf Feldformerelemente (z.B. das Feldformerelement mit der kleinsten zentralen Öffnung) ist nun beispielsweise so ausgelegt, dass es keinen der Einzel-Druckschalter drückt (Signal 0). Das zweite der fünf Feldformerelemente (z.B. das Feldformerelement mit der zweitkleinsten zentralen Öffnung) ist nun beispielsweise so ausgelegt, dass es genau einen der Einzel-Druckschalter drückt (Signal 1). Das dritte der fünf Feldformerelemente (z.B. das Feldformerelement mit der drittkleinsten zentralen Öffnung) ist nun beispielsweise so ausgelegt, dass es genau zwei der Einzel-Druckschalter drückt (Signal 2), usw.

Weiterhin wird vorgeschlagen, dass die elektronische Sensoreinheit eine Widerstandsmesseinheit umfasst, welche zumindest dazu vorgesehen ist, charakteristische ohmsche Widerstände, die den jeweiligen Wechselscheiben zugeordnet sind, insbesondere zu einer Erfassung eines momentan in der Feldformeraufnahmeeinheit angeordneten Feldformerelements, zu sensieren, vorzugsweise zu messen. Dadurch kann vorteilhaft eine zuverlässige und/oder kostengünstige Ausgestaltung der elektronischen Sensoreinheit erreicht werden, welche zudem vorzugsweise eine hohe Lebensdauer besitzt und/oder eine hohe Zykluszahl erlaubt. Insbesondere weist jede Wechselscheibe einen unterschiedlichen charakteristischen ohmschen Widerstand auf. Die Widerstandsmesseinheit ist insbesondere als ein Ohmmeter ausgebildet.

Zusätzlich oder alternativ wird vorgeschlagen, dass die elektronische Sensoreinheit ein Sender-Empfänger-System, beispielsweise ein RFID-System, zu einem berührungslosen Identifizieren von Typen von Feldformerelementen und/oder zu einem berührungslosen Lokalisieren von Positionen von Feldformerelementen umfasst. Dadurch kann vorteilhaft eine zuverlässige Ausgestaltung der elektronischen Sensoreinheit erreicht werden, welche zudem vorzugsweise eine besonders hohe Lebensdauer besitzt und/oder eine besonders hohe Zykluszahl erlaubt. Insbesondere ist dabei dem Feldformerelement, beispielsweise jeder Wechselscheibe oder zumindest einer Irislamelle jeder Irisblende, ein Senderelement des Sender-Empfänger-Systems, beispielsweise ein RFID-Element, zugeordnet. Das Senderelement ist dazu vorgesehen, von einem Empfängerelement des Sender-Empfänger-Systems, beispielsweise einem RFID-Reader, ausgelesen zu werden. Anhand des von dem Empfängerelement detektierten Signals kann dann auf die Position des Feldformerelements, insbesondere der Irislamelle, in der Feldformeraufnahmeeinheit und/oder auf den Typ des in der Feldformeraufnahmeeinheit angeordneten Feldformerelements, insbesondere Wechselscheibe, geschlossen werden. Insbesondere ist das Senderelement fest, vorzugsweise zerstörungsfrei untrennbar, mit dem Feldformerelement verbunden. Insbesondere bildet das Empfängerelement einen Teil der Induktionsheizeinheit aus.

Ferner wird eine Induktionsheizeinheit für ein Werkzeug-Schrumpfspannsystem, mit der Induktionsspule, mit der Feldformeinheit, umfassend die Feldformeraufnahmeeinheit und mit dem in der Feldformeraufnahmeeinheit angeordneten und/oder in der Feldformeraufnahmeeinheit anordenbaren Feldformerelement und mit der Induktionsheizeinheiten-Einstellvorrichtung, vorgeschlagen. Dadurch kann vorteilhaft eine optimale Feldformung, insbesondere für verschiedene, vorzugsweise verschieden geformte, von der Induktionsheizeinheit aufheizbare Werkzeugaufnahmen, ermöglicht werden. Vorteilhaft kann dadurch ein besonders schneller und/oder energiesparender Schrumpfspannvorgang erreicht werden. Vorteilhaft kann durch die optimierte Feldformung ein besonders zuverlässiger Dauerbetrieb des Werkzeug-Schrumpfspannsystems erreicht werden, insbesondere indem eine Gefahr einer Überhitzung reduziert werden kann. Vorteilhaft kann ein besonders benutzerfreundliches Werkzeug-Schrumpfspannsystem erhalten werden.

Zusätzlich wird ein Einstellverfahren zu einer Einstellung zumindest eines Feldformerelements einer Induktionsheizeinheit vorgeschlagen, wobei das Feldformerelement dazu vorgesehen ist, ein Induktionsmagnetfeld einer Induktionsspule der Induktionsheizeinheit zu formen und/oder abzuschirmen, und wobei ein Typ und/oder eine Position des Feldformerelements in einer Feldformeraufnahmeeinheit der Induktionsheizeinheit elektronisch detektiert wird. Dadurch kann vorteilhaft durch eine optimale Wahl der Position der Feldformerelemente (die zu einem Werkzeug und/oder einer Werkzeugaufnahme passende Öffnungsstellung der Irisöffnung der Irisblende) und/oder durch eine optimale Wahl des Feldformerelementen-Typs (die passende Wechselscheibe mit der für ein Werkzeug und/oder einer Werkzeugaufnahme passenden zentralen Öffnung) eine optimale Feldformung, insbesondere für verschiedene, vorzugsweise verschieden geformte, von der Induktionsheizeinheit aufheizbare Werkzeugaufnahmen, ermöglicht werden.

Außerdem wird vorgeschlagen, dass eine, insbesondere manuell variierbare, Momentanpositionierung des Feldformerelements überwacht wird, wobei die Momentanpositionierung des Feldformerelements mit einer, insbesondere durch einen Benutzer mittels der Eingabeeinheit vorgegebenen, Vorgabepositionierung des Feldformerelements abgeglichen wird und wobei eine Anzeige eines, insbesondere einzelnen, Anzeigeelements der Anzeigeeinheit der Induktionsheizeinheit bei einer Erkennung einer Übereinstimmung der Momentanpositionierung mit der Vorgabepositionierung von einer Darstellung des Abweichsignals zu einer Darstellung des, insbesondere zumindest farblich von dem Abweichsignal verschiedenen, Übereinstimmungssignals wechselt. Dadurch kann vorteilhaft eine besonders einfache, deutliche und/oder benutzerfreundliche optimierte Einstellung der Feldformeinheit zur Erreichung der optimalen Feldform ermöglicht werden.

Die erfindungsgemäße Induktionsheizeinheiten-Einstellvorrichtung, die erfindungsgemäße Induktionsheizeinheit und/oder das erfindungsgemäße Einstellverfahren sollen hierbei nicht auf die oben beschriebene Anwendung und Ausführungsform beschränkt sein. Insbesondere kann die erfindungsgemäße Induktionsheizeinheiten-Einstellvorrichtung, die erfindungsgemäße Induktionsheizeinheit und/oder das erfindungsgemäße Einstellverfahren zu einer Erfüllung einer hierin beschriebenen Funktionsweise eine von einer hierin genannten Anzahl von einzelnen Elementen, Bauteilen, Verfahrensschritten und Einheiten abweichende Anzahl aufweisen.

### Zeichnungen

Weitere Vorteile ergeben sich aus der folgenden Zeichnungsbeschreibung. In den Zeichnungen sind zwei Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische perspektivische Ansicht eines Werkzeug-Schrumpfspannsystems mit einer Induktionsheizeinheit mit einer Induktionsheizeinheiten-Einstellvorrichtung,
- Fig. 2: eine schematische perspektivische Ansicht der Induktionsheizeinheit mit der Induktionsheizeinheiten-Einstellvorrichtung,
- Fig. 3a: eine schematische Darstellung einer beispielhaften Umsetzung einer elektronischen Sensoreinheit der Induktionsheizeinheiten-Einstellvorrichtung,
- Fig. 3b: eine schematische Darstellung einer beispielhaften alternativen Umsetzung einer elektronischen Sensoreinheit der Induktionsheizeinheiten-Einstellvorrichtung,
- Fig. 4: eine schematische perspektivische Ansicht eines Teils der Induktionsheizeinheit mit einer Anzeigeeinheit der Induktionsheizeinheiten-Einstellvorrichtung,
- Fig. 5: ein schematisches Ablaufdiagramm eines Einstellverfahrens zu einer Einstellung zumindest eines Feldformerelements der Induktionsheizeinheiten-Einstellvorrichtung und
- Fig. 6: eine schematische perspektivische Ansicht einer alternativen Induktionsheizeinheit mit einer alternativen Induktionsheizeinheiten-Einstellvorrichtung.

### Beschreibung der Ausführungsbeispiele

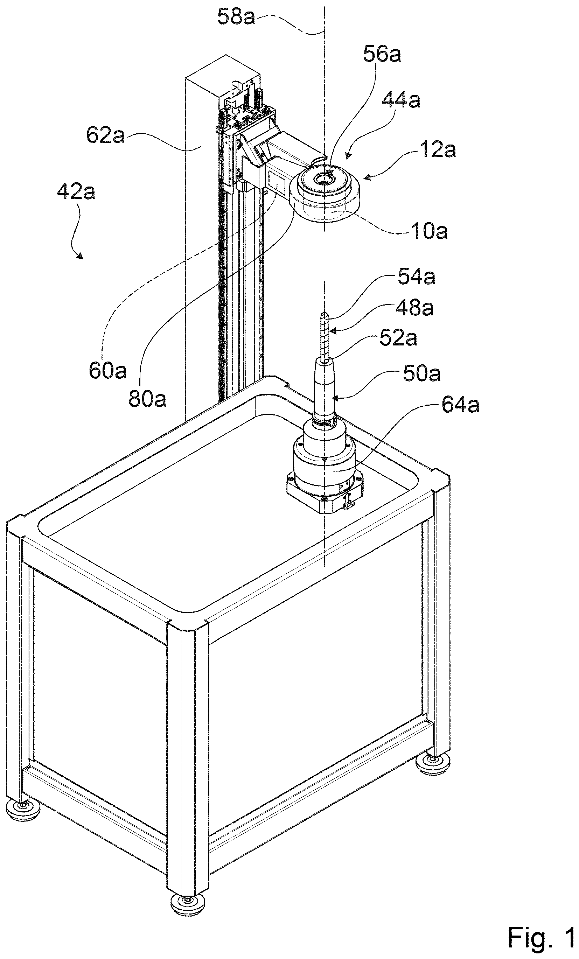

Fig. 1 zeigt eine schematische perspektivische Ansicht eines Werkzeug-Schrumpfspannsystems 42a mit einer Induktionsheizeinheiten-Einstellvorrichtung 44a. Das Werkzeug-Schrumpfspannsystem 42a bildet eine Ein- und/oder Ausschrumpfspannstation aus. Das Werkzeug-Schrumpfspannsystem 42a ist zu einem automatisierten Ein- und/oder Ausschrumpfen von Werkzeugen 48a in und/oder aus Werkzeugaufnahmen 50a vorgesehen. Das Werkzeug-Schrumpfspannsystem 42a ist zu einer Durchführung eines Einschrumpfvorgangs an Werkzeugen 48a zur Befestigung der Werkzeuge 48a in den Werkzeugaufnahmen 50a und/oder zu einer Durchführung eines Ausschrumpfvorgangs an Werkzeugen 48a zur Entnahme der Werkzeuge 48a aus Werkzeugaufnahmen 50a vorgesehen. Das Werkzeug-Schrumpfspannsystem 42a weist eine Induktionsheizeinheit 12a auf. Das Werkzeug-Schrumpfspannsystem 42a weist eine Turmeinheit 62a auf. Die Induktionsheizeinheit 12a ist an der Turmeinheit 62a angeordnet. Die Induktionsheizeinheit 12a ist entlang der Turmeinheit 62a zumindest in Vertikalrichtung bewegbar. Die Induktionsheizeinheit 12a ist zu einem Erhitzen der Werkzeugaufnahmen 50a vorgesehen. Die Werkzeugaufnahmen 50a sind als Schrumpfspannfutter ausgebildet. Die Werkzeugaufnahmen 50a weisen Werkzeugaufnahmebereiche auf, in die die Werkzeuge 48a eingesteckt werden. Die Werkzeuge 48a sind als Schaftwerkzeuge ausgebildet. Die Werkzeuge 48a weisen einen Werkzeugschaft 52a auf. Die Werkzeuge 48a weisen einen Arbeitsbereich 54a auf. Die Werkzeugaufnahmebereiche der Werkzeugaufnahmen 50a sind dazu vorgesehen, den Werkzeugschaft 52a eines Werkzeugs 48a aufzunehmen. Vorzugsweise ist der Werkzeugschaft 52a in einem in die Werkzeugaufnahme 50a eingespannten Zustand nahezu vollständig, insbesondere bis auf einen höchstens 5 mm, vorzugsweise höchstens 3 mm, bevorzugt höchstens 2 mm messenden Bereich in den Werkzeugaufnahmebereich der Werkzeugaufnahme 50a eingesteckt. Das Werkzeug-Schrumpfspannsystem 42a weist eine Spindeleinheit 64a auf. Die Spindeleinheit 64a ist dazu vorgesehen, die Werkzeugaufnahme 50a relativ zu der Induktionsheizeinheit 12a zu haltern. Die Spindeleinheit 64a ist rotierbar.

Die Induktionsheizeinheit 12a ist dazu vorgesehen, den Werkzeugaufnahmebereich der Werkzeugaufnahme 50a bei dem Einschrumpfvorgang und/oder bei dem Ausschrumpfvorgang durch ein induktives Erhitzen aufzuweiten. Die Induktionsheizeinheit 12a weist eine Induktionsspule 10a auf. Die Induktionsheizeinheit 12a ist dazu vorgesehen, ein Induktionsmagnetfeld zu erzeugen. Die Induktionsheizeinheiten-Einstellvorrichtung 44a ist zu einer Einstellung einer Feldform eines Wechselfelds, insbesondere des Induktionsmagnetfelds, der Induktionsspule 10a vorgesehen. Das Induktionsmagnetfeld ist dazu vorgesehen, mit dem Material der Werkzeugaufnahme 50a zu einer Erhitzung und damit zu einer Aufweitung der Werkzeugaufnahme 50a wechselzuwirken. Die Induktionsspule 10a weist eine Öffnung 56a auf. Die Öffnung 56a der Induktionsspule 10a ist parallel zu einer Axialrichtung 58a der Induktionsheizeinheit 12a ausgerichtet. Die Induktionsspule 10a umfasst Spulenwicklungen, welche um die Öffnung 56a der Induktionsspule 10a gewickelt sind. Das Werkzeug-Schrumpfspannsystem 42a weist eine Steuer- und/oder Regeleinheit 60a auf. Die Steuer- und/oder Regeleinheit 60a ist zumindest dazu vorgesehen, die Induktionsspule 10a mit Wechselstrom zu einer Erzeugung eines Induktionsmagnetfelds zu beaufschlagen.

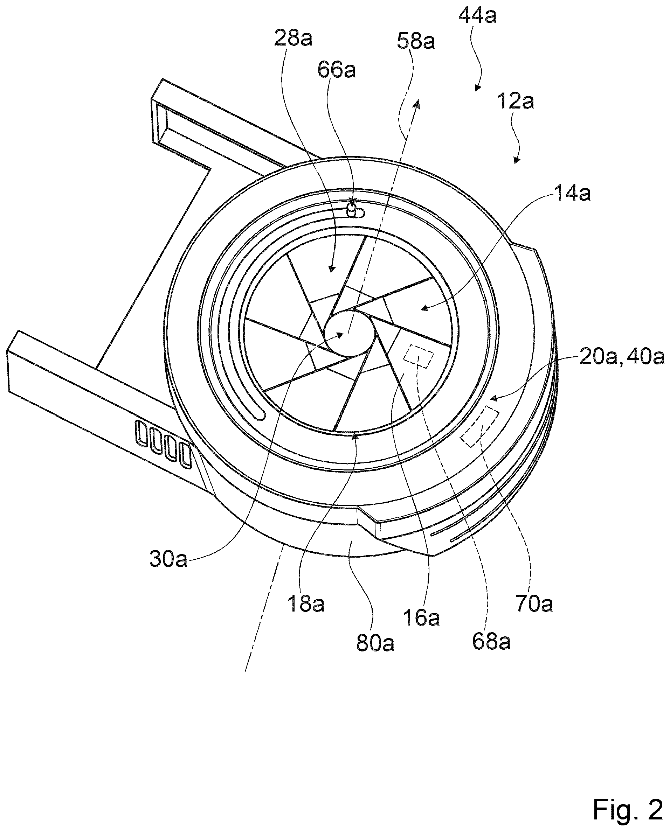

Die Fig. 2 zeigt eine schematische perspektivische Ansicht der Induktionsheizeinheit 12a mit der Induktionsheizeinheiten-Einstellvorrichtung 44a. Die Induktionsheizeinheiten-Einstellvorrichtung 44a umfasst eine Feldformeinheit 14a. Die Feldformeinheit 14a ist dazu vorgesehen, ein von der Induktionsspule 10a (in Fig. 2 nicht gezeigt) erzeugtes Induktionsmagnetfeld variabel zu formen. Die Feldformeinheit 14a ist dazu vorgesehen, das von der Induktionsspule 10a erzeugte Induktionsmagnetfeld variabel abzulenken. Die Feldformeinheit 14a ist dazu vorgesehen, das von der Induktionsspule 10a erzeugte Induktionsmagnetfeld derart abzulenken, dass ein möglichst geringer Anteil des Induktionsmagnetfelds, vorzugsweise möglichst kein Induktionsmagnetfeld, in der Axialrichtung 58a nach oben aus der Induktionsheizeinheit 12a austritt. Die Feldformeinheit 14a ist (unter anderem) dazu vorgesehen, das von der Induktionsspule 10a erzeugte Induktionsmagnetfeld derart abzulenken, dass ein in einer Werkzeugaufnahme 50a befestigtes Werkzeug 48a bei einem Ausschrumpfvorgang mittels der Induktionsheizeinheit 12a möglichst wenig erhitzt wird, vorzugsweise möglichst nicht erhitzt wird. Die Feldformeinheit 14a ist dazu vorgesehen, das von der Induktionsspule 10a erzeugte Induktionsmagnetfeld derart abzulenken, dass bei dem Einschrumpfvorgang und bei dem Ausschrumpfvorgang ein möglichst effektiver und effizienter optimierter Energieübertrag an die Werkzeugaufnahme 50a erfolgt.

Die Feldformeinheit 14a umfasst eine Feldformeraufnahmeeinheit 18a. Die Feldformeinheit 14a umfasst ein Feldformerelement 16a. Die Feldformeinheit 14a umfasst in dem in der Fig. 2 dargestellten Ausführungsbeispiel eine Mehrzahl an, insbesondere zueinander zumindest im Wesentlichen identisch ausgebildeten, Feldformerelementen 16a. Die Feldformeraufnahmeeinheit 18a ist dazu vorgesehen, das Feldformerelement 16a in und/oder an der Induktionsheizeinheit 12a zu haltern. Die Feldformerelemente 16a sind in der Feldformeraufnahmeeinheit 18a angeordnet. Die Feldformerelemente 16a sind relativ zueinander und/oder relativ zu der Induktionsspule 10a und/oder zumindest senkrecht relativ zu der Axialrichtung 58a bewegbar in der Feldformeraufnahmeeinheit 18a angeordnet. Die Feldformeraufnahmeeinheit 18a, insbesondere die Position des Feldformerelements 16a in der Feldformeinheit 14a, ist manuell verstellbar. Die Induktionsheizeinheit 12a weist eine manuelle Einstellvorrichtung 66a auf. Die manuelle Einstellvorrichtung 66a ist zu einer Einstellung der Position des Feldformerelements 16a, vorzugsweise der Positionen der Feldformerelemente 16a, vorgesehen. Das in der Fig. 2 beispielhaft gezeigte Feldformerelement 16a bildet einen Teil einer Irisblende 28a aus. Die Irisblende 28a weist eine Irisöffnung 30a auf. Die Irisöffnung 30a ist zentral in der Irisblende 28a angeordnet. Die Irisöffnung 30a ist größenvariabel. Die Größe der Irisöffnung 30a ist durch eine Bewegung der Feldformerelemente 16a in der Feldformeraufnahmeeinheit 18a zueinander einstellbar. Die Irisöffnung 30a weist eine Mehrzahl an typischen, auf bestimmte, typische Durchmesser von Werkzeugschäften 52a angepasste Öffnungsdurchmesser auf.

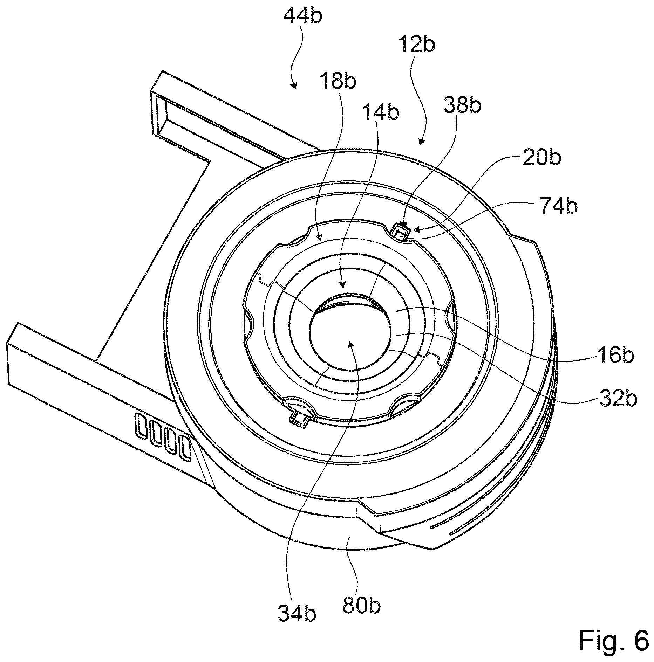

Die Induktionsheizeinheiten-Einstellvorrichtung 44a weist eine elektronische Sensoreinheit 20a auf. Die elektronische Sensoreinheit 20a ist dazu vorgesehen, die Position, insbesondere die Momentanposition, des durch die Feldformeraufnahmeeinheit 18a in und/oder an der Induktionsheizeinheit 12a gehalterten Feldformerelements 16a zu sensieren. Die elektronische Sensoreinheit 20a ist dazu vorgesehen, die sensierte Position des Feldformerelements 16a als elektronisches Messsignal auszugeben. Alternativ oder zusätzlich kann die elektronische Sensoreinheit 20a dazu vorgesehen sein, einen sensierten Typ eines alternativen Feldformerelements 16b, beispielsweise einer Wechselscheibe 32b (vgl. Fig. 6), als elektronisches Messsignal auszugeben.

Die elektronische Sensoreinheit 20a weist ein Sender-Empfänger-System 40a auf. Das Sender-Empfänger-System 40a ist als ein RFID-System ausgebildet. Das Sender-Empfänger-System 40a ist zu einem berührungslosen Lokalisieren von Positionen von Feldformerelementen 16a vorgesehen. Alternativ oder zusätzlich kann das Sender-Empfänger-System 40a zu einem Identifizieren von Typen von Feldformerelementen 16b, beispielsweise von Wechselscheiben 32b, vorgesehen sein (vgl. Fig. 6). Das Sender-Empfänger-System 40a weist eine Sendereinheit 68a auf. Die Sendereinheit 68a ist als ein RFID-Chip ausgebildet. Die Sendereinheit 68a ist fest mit dem beweglichen Feldformerelement 16a verbunden. Die Sendereinheit 68a ist zu einer Übertragung einer Positionsinformation des Feldformerelements 16a vorgesehen. Alternativ kann die Die Sendereinheit 68a ist zu einer Übertragung einer Typinformation über ein als Wechselscheibe 32b ausgebildetes Feldformerelement 16b vorgesehen sein. Das Sender-Empfänger-System 40a weist eine Empfängereinheit 70a auf. Die Empfängereinheit 70a ist als ein RFID-Reader ausgebildet. Die Empfängereinheit 70a ist dazu vorgesehen, die von der Sendereinheit 68a ausgesandte Positionsinformation des Feldformerelements 16a und/oder die von der Sendereinheit 68a ausgesandte Typinformation über das Feldformerelements 16a zu empfangen. Die Empfängereinheit 70a ist dazu vorgesehen, die empfangenen Positionsinformationen und/oder Typinformationen zu einer Weiterverarbeitung an die Steuer- und/oder Regeleinheit 60a weiterzuleiten. Alternativ kann die elektronische Sensoreinheit 20a jedoch auch frei von einem Sender-Empfänger-System 40a, insbesondere von einem RFID-System, ausgebildet sein und beispielsweise lediglich auf einem der im Folgenden beschriebenen Messprinzipe beruhen.

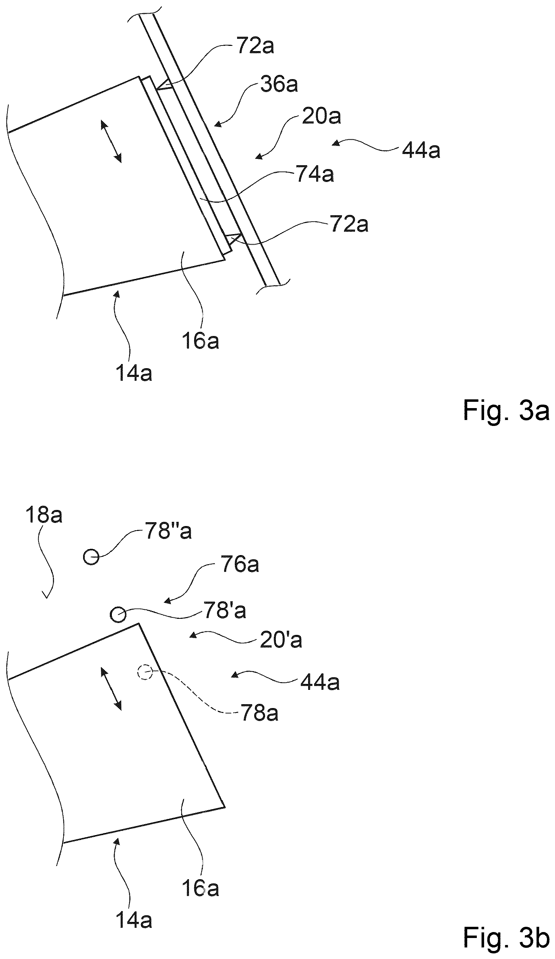

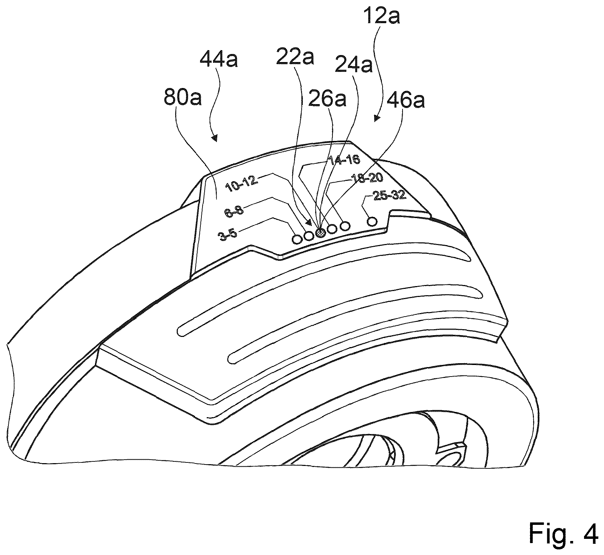

Die Fig. 3a zeigt schematisch eine beispielhafte Umsetzung der elektronischen Sensoreinheit 20a. Die elektronische Sensoreinheit 20a weist ein Potentiometer 36a auf. Das Potentiometer 36a ist zu einer Erfassung einer jeweiligen Momentanposition des Feldformerelements 16a in der Feldformeraufnahmeeinheit 18a vorgesehen. Das Potentiometer 36a weist Schleifkontakte 72a auf, welche einen durch das Feldformerelement 16a abhängig von seiner momentanen Position (hier als Translationsposition dargestellt, kann jedoch auch eine Drehposition oder eine Mischung aus Drehung und Translation sein) veränderlichen Widerstand eines Widerstandselements 74a abgreifen. Der von dem Potentiometer 36a abgegriffene momentane Wert des Widerstands des Widerstandselements 74a ermöglicht einen Rückschluss auf die Position des Feldformerelements 16a und somit auch auf die Größe der Irisöffnung 30a. Der von dem Potentiometer 36a abgegriffene momentane Wert des Widerstands des Widerstandselements 74a wird an die Steuer- und/oder Regeleinheit 60a, u.a. zur Steuerung eines Anzeigeelements 46a einer Anzeigeeinheit 22a (vgl. Fig. 4), übermittelt. Alternativ oder zusätzlich kann das Potentiometer 36a auch zu einer Erfassung eines momentan in der Feldformeraufnahmeeinheit 18b angeordneten, als Wechselscheibe 32b ausgebildeten Typs von Feldformerelement 16b (vgl. Fig. 6) vorgesehen sein. Im Fall von Wechselscheiben 32b würde jede Wechselscheibe 32b anstatt von Schleifkontakten 72a unbewegt Kontakte aufweisen, die bei jeder Wechselscheibe 32b an einer unterschiedlichen Stelle angeordnet sind, so dass über das Potentiometer 36a für jede Wechselscheibe 32b unterschiedliche Widerstände abfallen würden, aus welchen auf die jeweilige Wechselscheibe 32b geschlossen werden kann.

Die Fig. 3b zeigt schematisch eine alternative beispielhafte Umsetzung der elektronischen Sensoreinheit 20'a. Die elektronische Sensoreinheit 20'a weist ein Schalterraster 76a auf. Das Schalterraster 76a umfasst drei Schalter 78a, 78'a, 78"a. Eine größere oder kleine Anzahl von Schaltern 78a, 78'a, 78"a als drei ist selbstverständlich denkbar. Die Anzahl der Schalter 78a, 78'a, 78"a kann eine Anzahl an vorgesehenen Positionen der Feldformerelemente 16a und damit eine Anzahl an vorgesehenen Öffnungsgrößen der Irisöffnung 30a vorgeben. Die Schalter 78a, 78'a, 78"a sind von dem Feldformerelement 16a getrennt angeordnet. Die Schalter 78a, 78'a, 78"a sind auf einer Oberfläche der Feldformeraufnahmeeinheit 18a angeordnet. Die Schalter 78a, 78'a, 78"a sind als Druckschalter ausgebildet. Alternativ zu Druckschaltern sind auch andere, dem Fachmann geläufige Schalterausgestaltungen mit von einem Druckschalter abweichenden Schaltprinzipen denkbar. Das Schalterraster 76a ist zu einer Erfassung einer jeweiligen Momentanposition des Feldformerelements 16a in der Feldformeraufnahmeeinheit 18a vorgesehen. Bei einer Bewegung des Feldformerelements 16a, z.B. zu einer Veränderung der Größe der Irisöffnung 30a, überstreicht das Feldformerelement 16a einen oder mehrere der Schalter 78a, 78'a, 78"a des Schalterrasters 76a. In der beispielhaften Darstellung von Fig. 3b ist ein Schalter 78a des Schalterrasters 76a von dem Feldformerelement 16a betätigt. In der beispielhaften Darstellung von Fig. 3b sind die beiden anderen Schalter 78'a, 78"a des Schalterrasters 76a nicht von dem Feldformerelement 16a betätigt. Eine Anzahl an betätigten Schaltern 78a, 78'a, 78"a des Schalterrasters 76a ermöglicht einen Rückschluss auf die Position des Feldformerelements 16a und somit auch auf die Größe der Irisöffnung 30a. Eine Anzahl an betätigten Schaltern 78a, 78'a, 78"a des Schalterrasters 76a wird an die Steuer- und/oder Regeleinheit 60a, u.a. zur Steuerung des Anzeigeelements 46a der Anzeigeeinheit 22a (vgl. Fig. 4), übermittelt. Alternative Anordnungen der Schalter 78a, 78'a, 78"a, beispielsweise gegenüber einem Umfang der Feldformerelemente 16a, sind denkbar. Zudem ist denkbar, dass das Feldformerelement 16a eine nicht dargestellte Nocke oder dergleichen aufweist, welche dazu vorgesehen ist, die Schalter 78a, 78'a, 78"a bei einem Überstreichen der Schalter 78a, 78'a, 78"a zu betätigen. Alternativ ist beispielsweise auch denkbar, dass das Feldformerelement 16a nicht dargestellte Löcher aufweist, welche bei einem Überstreichen der Schalter 78a, 78'a, 78"a eine Betätigung der Schalter 78a, 78'a, 78"a an bestimmten vorgesehenen Positionen der Feldformerelemente 16a lösen und somit bevorzugte Positionen der Feldformerelemente 16a anzeigen. Alternativ oder zusätzlich kann das Schalterraster 76a auch zu einer Erfassung eines momentan in der Feldformeraufnahmeeinheit 18b angeordneten, als Wechselscheibe 32b ausgebildeten Typs von Feldformerelement 16b (vgl. Fig. 6) vorgesehen sein. Im Fall von Wechselscheiben 32b würde jede Wechselscheibe 32b z.B. ein spezifisches Gegenraster (beispielsweise in Form von Löchern oder Nocken oder dergleichen) aufweisen, welches eine bestimmte Schalterkombination des Schalterrasters 76a betätigt, anhand dessen die jeweilige Wechselscheibe 32b erkannt werden kann.

Die Fig. 4 zeigt einen Teil der Induktionsheizeinheit 12a mit der Induktionsheizeinheiten-Einstellvorrichtung 44a. Die Induktionsheizeinheit 12a umfasst ein Gehäuse 80a. Das Gehäuse 80a umgibt zumindest die Induktionsspule 10a. Das Gehäuse 80a umgibt zumindest in Umfangsrichtung die Feldformeraufnahmeeinheit 18a. Das Gehäuse 80a umgibt zumindest in Umfangsrichtung die Feldformerelemente 16a. Die Induktionsheizeinheiten-Einstellvorrichtung 44a weist die Anzeigeeinheit 22a auf. Die Anzeigeeinheit 22a ist dazu vorgesehen, die Position des von der elektronischen Sensoreinheit 20a überwachten und/oder sensierten Feldformerelements 16a mittels eines Anzeigesignals auszugeben. Die Anzeigeeinheit 22a ist dazu vorgesehen, eine Positionsvorauswahl für das Feldformerelement 16a, insbesondere eine über eine Eingabeeinheit (nicht gezeigt) des Werkzeug-Schrumpfspannsystems 42a von einem Benutzer eingestellte vorgesehene Position des Feldformerelements 16a, mittels eines Auswahlsignals anzuzeigen. Die Anzeigeeinheit 22a ist dazu vorgesehen, eine Abweichung von einer vorausgewählten Position des Feldformerelements 16a, insbesondere eine Abweichung von einer vorausgewählten Größe der Irisöffnung 30a, mittels eines Abweichsignals anzuzeigen. Die Anzeigeeinheit 22a ist dazu vorgesehen, eine Übereinstimmung mit der vorausgewählten Position des Feldformerelements 16a, insbesondere eine Übereinstimmung mit der vorausgewählten Größe der Irisöffnung 30a, mittels eines Übereinstimmungssignals anzuzeigen. Im Fall einer Wechselscheibe 32b (vgl. Fig. 6) ist die Anzeigeeinheit 22a alternativ dazu vorgesehen, den Typ des von der elektronischen Sensoreinheit 20a überwachten und/oder sensierten Feldformerelements 16b, vorzugsweise den Typ der Wechselscheibe 32b, mittels eines Anzeigesignals auszugeben. Die Anzeigeeinheit 22a ist in diesem Fall dazu vorgesehen, eine Typenvorauswahl für das Feldformerelement 16b, insbesondere eine über die Eingabeeinheit des Werkzeug-Schrumpfspannsystems 42a von einem Benutzer eingestellte vorgesehene Wechselscheibe 32b, mittels des Auswahlsignals anzuzeigen. Die Anzeigeeinheit 22a ist in diesem Fall dazu vorgesehen, ein Abweichen von einem vorausgewählten Typ des Feldformerelements 16b, insbesondere ein Abweichen von einer vorausgewählten Wechselscheibe 32b, mittels des Abweichsignals anzuzeigen. Die Anzeigeeinheit 22a ist in diesem Fall dazu vorgesehen, eine Übereinstimmung mit dem vorausgewählten Typ des Feldformerelements 16b, insbesondere eine Übereinstimmung mit der vorausgewählten Wechselscheibe 32b, mittels des Übereinstimmungssignals anzuzeigen.

Die Anzeigeeinheit 22a weist Leuchtelemente 24a auf. Die Leuchtelemente 24a sind als LEDs ausgebildet. Die Leuchtelemente 24a sind an einer Außenseite des Gehäuses 80a angeordnet. Die Leuchtelemente 24a sind in einer Reihe angeordnet. Die Anzeigeeinheit 22a umfasst in dem in der Fig. 4 dargestellten Ausführungsbeispiel sechs Leuchtelemente 24a. Die Leuchtelemente 24a bilden Farbwechselelemente 26a aus. Die Leuchtelemente 24a sind dazu vorgesehen, die Anzeigesignale, insbesondere das Auswahlsignal, das Abweichsignal und das Übereinstimmungssignal, auszugeben. Die Leuchtelemente 24a sind dazu vorgesehen, die Anzeigesignale über eine Darstellung von verschiedenen Farben und/oder über eine Auswahl, welche(s) der Leuchtelemente 24a der Anzeigeeinheit 22a erleuchtet wird, auszugeben. Das Abweichsignal ist als ein rotes Aufleuchten des Farbwechselelements 26a ausgebildet. Das Übereinstimmungssignal ist als ein grünes Aufleuchten des Farbwechselelements 26a ausgebildet. Die Leuchtelemente 24a sind jeweils bestimmten Werkzeugschaftgrößen (in Fig. 4 als Zahlenwerte dargestellt) und/oder Vorauswahlen zugeordnet. Das Auswahlsignal ist als ein Leuchten des Leuchtelements 24a der Mehrzahl an Leuchtelementen 24a ausgebildet, welches der durch den Benutzer vorausgewählten Werkzeugschaftgröße und/oder Vorauswahl entspricht.

Die Anzeigeeinheit 22a, insbesondere die von den Leuchtelementen 24a der Anzeigeeinheit 22a ausgegebenen Anzeigesignale, sind von der Steuer- und/oder Regeleinheit 60a gesteuert. Die elektronische Sensoreinheit 20a ist dazu vorgesehen, einen manuellen Einstellvorgang zu überwachen, welcher den Typ des Feldformerelements 16b (vgl. Fig. 6) oder die Position des Feldformerelements 16a beeinflusst. Die Anzeigeeinheit 22a ist dazu vorgesehen, in Abhängigkeit von einer Übereinstimmung des Typs des Feldformerelements 16b oder in Abhängigkeit von einer Übereinstimmung der Position des Feldformerelements 16a mit der Vorauswahl, das Abweichsignal oder das Übereinstimmungssignal mittels des Farbwechselelements 26a auszugeben.

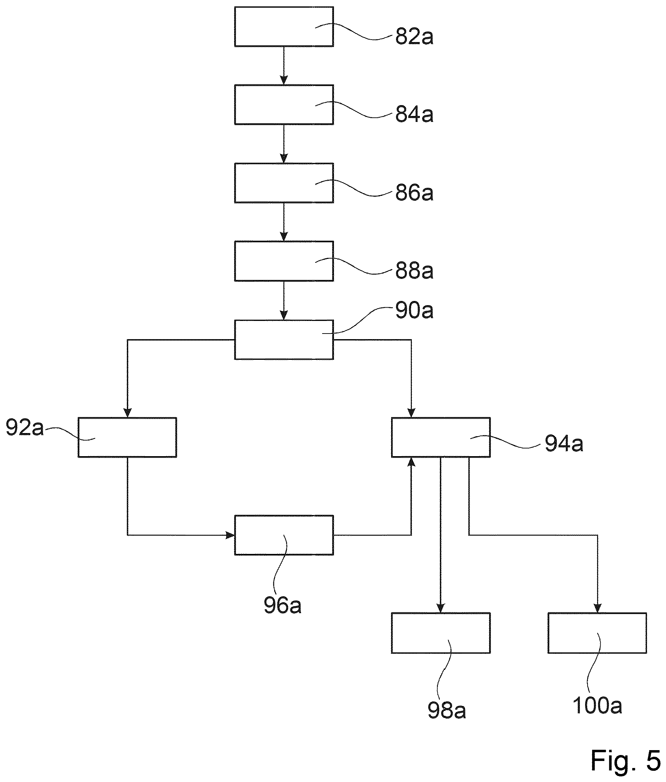

Die Fig. 5 zeigt ein schematisches Ablaufdiagramm eines Einstellverfahrens zu einer Einstellung zumindest eines Feldformerelements 16a der Induktionsheizeinheiten-Einstellvorrichtung 44a, insbesondere der Induktionsheizeinheit 12a. In zumindest einem Verfahrensschritt 82a wird durch einen Benutzer eine Vorauswahl getroffen, welche beispielsweise einen Durchmesser eines Werkzeugschafts 52a eines mittels des Werkzeug-Schrumpfspannsystems 42a einzuschrumpfenden oder eines auszuschrumpfenden Werkzeugs 48a, eine gewünschte Größe der Irisöffnung 30a und/oder im Fall von Wechselscheiben 32b eine gewünschte Größe einer zentralen Öffnung 34b der Wechselscheibe 32b umfasst. Der Benutzer übergibt die Vorauswahl mittels der Eingabeeinheit an das Werkzeug-Schrumpfspannsystem 42a. In zumindest einem weiteren Verfahrensschritt 84a wird die Vorauswahl von der Steuer- und/oder Regeleinheit 60a verarbeitet. In dem Verfahrensschritt 84a wird die Anzeigeeinheit 22a von der Steuer- und/oder Regeleinheit 60a zur Ausgabe des Auswahlsignals angesteuert. In zumindest einem weiteren Verfahrensschritt 86a wird das Auswahlsignal von der Anzeigeeinheit 22a angezeigt. In dem Verfahrensschritt 86a leuchtet das Leuchtelement 24a der Anzeigeeinheit 22a auf, welches der Vorauswahl, insbesondere dem in dem Verfahrensschritt 82a ausgewählten Durchmesser des Werkzeugschafts 52a, der in dem Verfahrensschritt 82a ausgewählten gewünschten Größe der Irisöffnung 30a und/oder im Fall von Wechselscheiben 32b der in dem Verfahrensschritt 82a ausgewählten gewünschten Wechselscheibe 32b, entspricht. Alle weiteren Leuchtelemente 24a der Anzeigeeinheit 22a, insbesondere alle weiteren Leuchtelemente 24a der Anzeigeeinheit 22a, die weitere Durchmesser von Werkzeugschäften 52a, weitere Größen von Irisöffnungen 30a und/oder im Fall von Wechselscheiben 32b weitere Wechselscheiben 32b mit anderen zentralen Öffnungen 34b anzeigen, bleiben dunkel und/oder unbeleuchtet. In zumindest einem weiteren Verfahrensschritt 88a wird die Position des Feldformerelements 16a in der Feldformeraufnahmeeinheit 18a der Induktionsheizeinheit 12a und/oder im Fall von Wechselscheiben 32b der Typ des Feldformerelements 16b in der Feldformeraufnahmeeinheit 18b, insbesondere die eingesetzte Wechselscheibe 32b, elektronisch detektiert. In dem Verfahrensschritt 88a wird eine manuell variierbare Momentanpositionierung des Feldformerelements 16a überwacht. In zumindest einem weiteren Verfahrensschritt 90a wird das in dem Verfahrensschritt 88a ermittelte elektronische Messsignal mit der in dem Verfahrensschritt 82a getroffenen Vorauswahl abgeglichen. In dem Verfahrensschritt 90a wird die Momentanpositionierung des Feldformerelements 16a mit einer Vorgabepositionierung des Feldformerelements 16a abgeglichen. Im Fall von Wechselscheiben 32b wird in dem Verfahrensschritt 90a eine momentan in der Feldformeraufnahmeeinheit 18b positionierte Wechselscheibe 32b mit einer Vorgabe für eine zu positionierende Wechselscheibe 32b abgeglichen. In zumindest einem weiteren Verfahrensschritt 92a wird bei einer Erkennung einer Abweichung des Messsignals von der Vorauswahl und/oder von der Vorgabe, von dem einzelnen beleuchteten Leuchtelement 24a, insbesondere von dem Leuchtelement 24a, welches das Auswahlsignal ausgibt, das Abweichsignal ausgegeben. In dem Verfahrensschritt 92a leuchtet das, insbesondere dem vorausgewählten Durchmesser von Werkzeugschäften 52a, der vorausgewählten Größen von Irisöffnungen 30a und/oder im Fall von Wechselscheiben 32b der vorausgewählten Wechselscheibe 32b zugeordnete, Leuchtelement 24a rot auf. In zumindest einem, insbesondere zu dem Verfahrensschritt 92a alternativen, weiteren Verfahrensschritt 94a wird bei einer Erkennung einer Übereinstimmung des Messsignals mit der Vorauswahl und/oder mit der Vorgabe, von dem einzelnen beleuchteten Leuchtelement 24a, insbesondere von dem Leuchtelement 24a, welches das Auswahlsignal ausgibt, das Übereinstimmungssignal ausgegeben. In dem Verfahrensschritt 94a leuchtet das, insbesondere dem vorausgewählten Durchmesser von Werkzeugschäften 52a, der vorausgewählten Größen von Irisöffnungen 30a und/oder im Fall von Wechselscheiben 32b der vorausgewählten Wechselscheibe 32b zugeordnete, Leuchtelement 24a grün auf. In zumindest einem weiteren Verfahrensschritt 96a wird, insbesondere in Reaktion auf den Verfahrensschritt 92a, die Position des Feldformerelements 16a in der Feldformeraufnahmeeinheit 18a oder im Fall von Wechselscheiben 32b der Typ der Wechselscheibe 32b manuell von dem Benutzer verändert. In dem Verfahrensschritt 96a wechselt die Anzeige des einzelnen Anzeigeelements 46a der Anzeigeeinheit 22a, insbesondere des Leuchtelements 24a, welches das Auswahlsignal anzeigt, bei einer Erkennung einer, durch die von dem Benutzer vorgenommene manuelle Veränderung erzeugten Übereinstimmung, z.B. einer Übereinstimmung der Momentanpositionierung mit der Vorgabepositionierung oder im Fall von Wechselscheiben 32b einer Übereinstimmung der vorausgewählten Wechselscheibe 32b mit der aktuell in der Feldformeraufnahmeeinheit 18a eingesetzten Wechselscheibe 32b, von der Darstellung des Abweichsignals zu der Darstellung des farblich von dem Abweichsignal verschiedenen Übereinstimmungssignals. In zumindest einem auf den Verfahrensschritt 94a folgenden weiteren Verfahrensschritt 98a wird von dem Werkzeug-Schrumpfspannsystem 42a mit der Induktionsheizeinheiten-Einstellvorrichtung 44a ein Einschrumpfvorgang zur Befestigung eines Werkzeugs 48a in einer Werkzeugaufnahme 50a durchgeführt. Alternativ wird in zumindest einem auf den Verfahrensschritt 94a folgenden weiteren Verfahrensschritt 100a von dem Werkzeug-Schrumpfspannsystem 42a mit der Induktionsheizeinheiten-Einstellvorrichtung 44a ein Ausschrumpfvorgang zu einem Lösen eines Werkzeugs 48a aus einer Werkzeugaufnahme 50a durchgeführt.

In der Figur 6 ist ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 5, verwiesen werden kann. Zur Unterscheidung der Ausführungsbeispiele ist der Buchstabe a den Bezugszeichen des Ausführungsbeispiels in den Figuren 1 bis 5 nachgestellt. In dem Ausführungsbeispiel der Figur 6 ist der Buchstabe a durch den Buchstaben b ersetzt. Teilweise wurde in der voranstehenden Figurenbeschreibung bereits auf das weitere Ausführungsbeispiel verwiesen, wobei die betreffenden Stellen bereits jeweils durch die Verwendung des Suffixes b in den entsprechenden Bezugszeichen gekennzeichnet sind.

Die Fig. 6 zeigt eine schematische perspektivische Ansicht einer alternativen Induktionsheizeinheit 12b mit einer alternativen Induktionsheizeinheiten-Einstellvorrichtung 44b. Die Induktionsheizeinheiten-Einstellvorrichtung 44b umfasst eine Feldformeinheit 14b. Die Feldformeinheit 14b umfasst eine Feldformeraufnahmeeinheit 18b. Die Feldformeinheit 14b umfasst ein Feldformerelement 16b. Das Feldformerelement 16b ist in dem in der Fig. 6 dargestellten Ausführungsbeispiel als eine Wechselscheibe 32b einer Mehrzahl von auswechselbar in die Feldformeraufnahmeeinheit 18b einsetzbaren und jeweils eine unterschiedlich große Öffnung 34b aufweisenden Wechselscheiben 32b ausgebildet. Zumindest eine der Wechselscheiben 32b kann in zwei oder mehr Teile aufgeteilt sein, die bei einem Einsetzen in die Feldformeraufnahmeeinheit 18b miteinander zur Ausbildung der Wechselscheibe 32b kombiniert werden, um ein Ausschrumpfen von abgesetzten Werkzeugen 48b, d.h. insbesondere Werkzeugen 48b, bei denen ein Schneidendurchmesser in einem Arbeitsbereich 54b des Werkzeugs 48b größer ist als ein Durchmesser eines Werkzeugschafts 52b des Werkzeugs 48b.

Die Induktionsheizeinheiten-Einstellvorrichtung 44b weist eine elektronische Sensoreinheit 20b auf. Die elektronische Sensoreinheit 20b ist dazu vorgesehen, einen sensierten Typ des Feldformerelements 16b, insbesondere der Wechselscheibe 32b, als elektronisches Messsignal auszugeben. Die elektronische Sensoreinheit 20b weist eine Widerstandsmesseinheit 38b auf. Die Widerstandsmesseinheit 38b ist dazu vorgesehen, charakteristische ohmsche Widerstände, die den jeweiligen Wechselscheiben 32b zugeordnet sind, zu einer Erfassung eines momentan in der Feldformeraufnahmeeinheit 18b angeordneten Feldformerelements 16b zu sensieren. Die Wechselscheiben 32b weisen Widerstandselemente 74b auf. Jede Wechselscheibe 32b umfasst ein Widerstandselement 74b mit einem wesentlich verschiedenen ohmschen Widerstand. Die Widerstandsmesseinheit 38b ist dazu vorgesehen, insbesondere in Zusammenarbeit mit einer Steuer- und/oder Regeleinheit 60b, die jeweiligen Wechselscheiben 32b, und dadurch vorzugsweise auch die jeweiligen Öffnungsgrößen der Öffnung 34b, zu identifizieren.

### Bezugszeichen

- 10: Induktionsspule
- 12: Induktionsheizeinheit
- 14: Feldformeinheit
- 16: Feldformerelement
- 18: Feldformeraufnahmeeinheit
- 20: elektronische Sensoreinheit
- 22: Anzeigeeinheit
- 24: Leuchtelement
- 26: Farbwechselelement
- 28: Irisblende
- 30: Irisöffnung
- 32: Wechselscheibe
- 34: Öffnung
- 36: Potentiometer
- 38: Widerstandsmesseinheit
- 40: Sender-Empfänger-System
- 42: Werkzeug-Schrumpfspannsystem
- 44: Induktionsheizeinheiten-Einstellvorrichtung
- 46: Anzeigeelement
- 48: Werkzeug
- 50: Werkzeugaufnahme
- 52: Werkzeugschaft
- 54: Arbeitsbereich
- 56: Öffnung
- 58: Axialrichtung
- 60: Steuer- und/oder Regeleinheit
- 62: Turmeinheit
- 64: Spindeleinheit
- 66: manuelle Einstellvorrichtung
- 68: Sendereinheit
- 70: Empfängereinheit
- 72: Schleifkontakt
- 74: Widerstandselement
- 76: Schalterraster
- 78: Schalter
- 80: Gehäuse
- 82: Verfahrensschritt
- 84: Verfahrensschritt
- 86: Verfahrensschritt
- 88: Verfahrensschritt
- 90: Verfahrensschritt
- 92: Verfahrensschritt
- 94: Verfahrensschritt
- 96: Verfahrensschritt
- 98: Verfahrensschritt
- 100: Verfahrensschritt

## Patentansprüche

1. Induktionsheizeinheiten-Einstellvorrichtung (44a; 44b) zu einer Einstellung zumindest einer Feldform eines Wechselfelds einer Induktionsspule (10a; 10b) einer Induktionsheizeinheit (12a; 12b), mit einer Feldformeinheit (14a; 14b), welche dazu vorgesehen ist, das durch die Induktionsspule (10a; 10b) erzeugte Wechselfeld, vorzugsweise variabel, zu formen und/oder abzuschirmen, umfassend zumindest ein Feldformerelement (16a; 16b) und eine Feldformeraufnahmeeinheit (18a; 18b), welche dazu vorgesehen ist, das Feldformerelement (16a; 16b) in und/oder an der Induktionsheizeinheit (12a; 12b) zu haltern, **gekennzeichnet durch** eine elektronische Sensoreinheit (20a; 20b), welche dazu vorgesehen ist, einen Typ und/oder eine Position des durch die Feldformeraufnahmeeinheit (18a; 18b) in und/oder an der Induktionsheizeinheit (12a; 12b) gehalterten Feldformerelements (16a; 16b) zu sensieren und ein elektronisches Messsignal auszugeben,
und durch eine Anzeigeeinheit (22a; 22b), welche dazu vorgesehen ist, den Typ und/oder die Position des von der elektronischen Sensoreinheit (20a; 20b) überwachten und/oder sensierten Feldformerelements (16a; 16b) auszugeben,
wobei die Anzeigeeinheit (22a; 22b) zumindest ein Farbwechselelement (26a; 26b) aufweist,
wobei die Anzeigeeinheit (22a; 22b) dazu vorgesehen ist, ein Abweichen von einem vorausgewählten Typ des Feldformerelements (16b) und/oder eine Abweichung von einer vorausgewählten Position des Feldformerelements (16a) mittels eines Abweichsignals anzuzeigen, wobei die Anzeigeeinheit (22a; 22b) dazu vorgesehen ist, ein Übereinstimmen mit einem vorausgewählten Typ des Feldformerelements (16b) und/oder eine Übereinstimmung mit einer vorausgewählten Position des Feldformerelements (16a) mittels eines Übereinstimmungssignals anzuzeigen,
und wobei die elektronische Sensoreinheit (20a; 20b) dazu vorgesehen ist, einen, insbesondere manuellen, den Typ oder die Position des Feldformerelements (16a; 16b) beeinflussenden, Einstellvorgang zu überwachen und in Abhängigkeit von einer Übereinstimmung des Typs oder der Position des Feldformerelements (16a; 16b) mit der Vorauswahl, das Abweichsignal oder das Übereinstimmungssignal mittels des Farbwechselelements (26a; 26b) auszugeben.

2. Induktionsheizeinheiten-Einstellvorrichtung (44a; 44b) nach Anspruch 1, **dadurch gekennzeichnet, dass** die Anzeigeeinheit (22a; 22b) zumindest ein Leuchtelement (24a; 24b) aufweist.

3. Induktionsheizeinheiten-Einstellvorrichtung (44a) nach einem der vorhergehenden Ansprüche, **dadurch gekennzeichnet, dass** das Feldformerelement (16a) zumindest einen Teil einer Irisblende (28a) mit einer größenvariablen Irisöffnung (30a) ausbildet.

4. Induktionsheizeinheiten-Einstellvorrichtung (44b) nach einem der Ansprüche 1 oder 2, **dadurch gekennzeichnet, dass** das Feldformerelement (16b) zumindest einen Teil einer Wechselscheibe (32b) einer Mehrzahl von auswechselbar in die Feldformeraufnahmeeinheit (18b) einsetzbaren und jeweils eine unterschiedlich große Öffnung (34b) aufweisenden Wechselscheiben (32b) ausbildet.

5. Induktionsheizeinheiten-Einstellvorrichtung (44a; 44b) nach einem der vorhergehenden Ansprüche, **dadurch gekennzeichnet, dass** die elektronische Sensoreinheit (20a; 20b) ein Potentiometer (36a; 36b), insbesondere zu einer Erfassung einer jeweiligen Momentanposition des Feldformerelements (16a) in der Feldformeraufnahmeeinheit (18a) und/oder zur Erfassung eines momentan in der Feldformeraufnahmeeinheit (18b) angeordneten Typs von Feldformerelement (16b), umfasst.

6. Induktionsheizeinheiten-Einstellvorrichtung (44b) nach Anspruch 4,
**dadurch gekennzeichnet, dass** die elektronische Sensoreinheit (20b) eine Widerstandsmesseinheit (38b) umfasst, welche zumindest dazu vorgesehen ist, charakteristische ohmsche Widerstände, die den jeweiligen Wechselscheiben (32b) zugeordnet sind, insbesondere zu einer Erfassung eines momentan in der Feldformeraufnahmeeinheit (18b) angeordneten Feldformerelements (16b), zu sensieren.

7. Induktionsheizeinheiten-Einstellvorrichtung (44a; 44b) nach einem der vorhergehenden Ansprüche, **dadurch gekennzeichnet, dass** die elektronische Sensoreinheit (20a; 20b) ein Sender-Empfänger-System (40a; 40b), beispielsweise ein RFID-System, zu einem berührungslosen Identifizieren von Typen von Feldformerelementen (16b) und/oder zu einem berührungslosen Lokalisieren von Positionen von Feldformerelementen (16a) umfasst.

8. Induktionsheizeinheit (12a; 12b) für ein Werkzeug-Schrumpfspannsystem (42a; 42b), mit zumindest einer Induktionsspule (10a; 10b), mit zumindest einer Feldformeinheit (14a; 14b), umfassend eine Feldformeraufnahmeeinheit (18a; 18b) und mit zumindest einem in der Feldformeraufnahmeeinheit (18a; 18b) angeordneten und/oder in der Feldformeraufnahmeeinheit (18a; 18b) anordenbaren Feldformerelement (16a; 16b) und mit einer Induktionsheizeinheiten-Einstellvorrichtung (44a; 44b) nach einem der vorhergehenden Ansprüche.

9. Einstellverfahren zu einer Einstellung zumindest eines Feldformerelements (16a; 16b) einer Induktionsheizeinheit (12a; 12b), welches dazu vorgesehen ist, ein Induktionsmagnetfeld einer Induktionsspule (10a; 10b) der Induktionsheizeinheit (12a; 12b) zu formen und/oder abzuschirmen, insbesondere mittels einer Induktionsheizeinheiten-Einstellvorrichtung (44a; 44b) nach einem der Ansprüche 1 bis 7, **dadurch gekennzeichnet, dass** ein Typ und/oder eine Position des Feldformerelements (16a; 16b) in einer Feldformeraufnahmeeinheit (18a; 18b) der Induktionsheizeinheit (12a; 12b) elektronisch detektiert wird, wobei eine, insbesondere manuell variierbare, Momentanpositionierung des Feldformerelements (16a) überwacht wird, wobei die Momentanpositionierung des Feldformerelements (16a) mit einer Vorgabepositionierung des Feldformerelements (16a) abgeglichen wird und wobei eine Anzeige eines einzelnen Anzeigeelements (46a) einer Anzeigeeinheit (22a) der Induktionsheizeinheit (12a) bei einer Erkennung einer Übereinstimmung der Momentanpositionierung mit der Vorgabepositionierung von einer Darstellung eines Abweichsignals zu einer Darstellung eines zumindest farblich von dem Abweichsignal verschiedenen Übereinstimmungssignals wechselt.

## Claims

1. An induction heating unit adjustment device (44a; 44b) for an adjustment of at least one field shape of an alternating field of an induction coil (10a; 10b) of an induction heating unit (12a; 12b), having a field forming unit (14a; 14b) which is configured for a, preferably variable, shaping and/or shielding of the alternating field generated by the induction coil (10a; 10b), comprising at least one field former element (16a; 16b) and a field former receiving unit (18a; 18b), which is configured to hold the field former element (16a; 16b) in and/or on the induction heating unit (12a; 12b), **characterized by** an electronic sensor unit (20a; 20b), which is configured for sensing a type and/or a position of the field former element (16a; 16b) that is held in and/or on the induction heating unit (12a; 12b) by the field former receiving unit (18a; 18b), and for outputting an electronic measurement signal,
and by an indicator unit (22a; 22b), which is configured to output the type and/or the position of the field former element (16a; 16b) that is monitored and/or sensed by the electronic sensor unit (20a; 20b),
wherein the indicator unit (22a; 22b) comprises at least one color-changing element (26a; 26b),
wherein the indicator unit (22a; 22b) is configured to indicate a deviation from a pre-selected type of the field former element (16b) and/or a deviation from a pre-selected position of the field former element (16a) by means of a deviation signal,
wherein the indicator unit (22a; 22b) is configured to indicate a match with a pre-selected type of the field former element (16b) and/or a match with a pre-selected position of the field former element (16a) by means of a matching signal,
and wherein the electronic sensor unit (20a; 20b) is configured to monitor an, in particular manual, adjustment process that influences the type or the position of the field former element (16a; 16b) and, depending on a matching of the type or the position of the field former element (16a; 16b) with the pre-selection, to output the deviation signal or the matching signal by means of the color-changing element (26a; 26b).

2. The induction heating unit adjustment device (44a; 44b) according to claim 1, **characterized in that** the indicator unit (22a; 22b) comprises at least one luminous element (24a; 24b).

3. The induction heating unit adjustment device (44a) according to any one of the preceding claims, **characterized in that** the field former element (16a) forms at least a portion of an iris aperture (28a) with an iris opening (30a) that is variable in size.

4. The induction heating unit adjustment device (44b) according to any one of claims 1 or 2, **characterized in that** the field former element (16b) forms at least a portion of an exchangeable disk (32b) of a plurality of exchangeable disks (32b) which are exchangeably insertable in the field former receiving unit (18b) and which in each case have a differently sized opening (34b).

5. The induction heating unit adjustment device (44a; 44b) according to any one of the preceding claims, **characterized in that** the electronic sensor unit (20a; 20b) comprises a potentiometer (36a; 36b), in particular for capturing of a respective current position of the field former element (16a) in the field former receiving unit (18a) and/or for capturing of a type of the field former element (16b) that is currently arranged in the field former receiving unit (18b).

6. The induction heating unit adjustment device (44b) according to claim 4, **characterized in that** the electronic sensor unit (20b) comprises a resistance measurement unit (38b), which is at least configured for sensing characteristic ohmic resistances which are allocated to the respective exchangeable disks (32b), in particular for a capturing of a field former element (16b) that is currently arranged in the field former receiving unit (18b).

7. The induction heating unit adjustment device (44a; 44b) according to any one of the preceding claims, **characterized in that** the electronic sensor unit (20a; 20b) comprises a transmitter-receiver system 40a; 40b), for example an RFID system, for a touch-free identification of types of field former elements (16b) and/or for a touch-free localization of positions of field former elements (16a).

8. An induction heating unit (12a; 12b) for a tool shrink-clamping system (42a; 42b), with at least one induction coil (10a; 10b), with at least one field forming unit (14a; 14b) comprising a field former receiving unit (18a; 18b), and with at least one field former element (16a; 16b), which is arranged in the field former receiving unit (18a; 18b) and/or arrangeable in the field former receiving unit (18a; 18b), and with an induction heating unit adjustment device (44a; 44b) according to any one of the preceding claims.

9. An adjusting method for an adjustment of at least one field former element (16a; 16b) of an induction heating unit (12a; 12b), which is configured for shaping and/or shielding an induction magnetic field of an induction coil (10a; 10b) of the induction heating unit (12a; 12b), in particular by means of an induction heating unit adjustment device (44a; 44b) according to any one of claims 1 to 7, **characterized in that** a type and/or a position of the field former element (16a; 16b) in a field former receiving unit (18a; 18b) of the induction heating unit (12a; 12b) is detected electronically, wherein a current positioning, in particular a manually variable current positioning, of the field former element (16a) is monitored, wherein the current positioning of the field former element (16a) is compared with a predetermined positioning of the field former element (16a) and wherein upon detection of a match of the current positioning with the predetermined positioning, an indication of an individual indicator element (46a) of an indicator unit (22a) of the induction heating unit (12a) changes from giving a deviation signal to giving a matching signal, which differs from the deviation signal at least color-wise.

## Revendications

1. Dispositif de réglage d'unités de chauffage par induction (44a; 44b) pour un réglage d'au moins une forme de champ d'un champ alternatif d'une bobine d'induction (10a; 10b) d'une unité de chauffage par induction (12a; 12b), comprenant une unité de mise en forme de champ (14a; 14b) qui est prévue pour mettre en forme et/ou protéger, de préférence de manière variable, le champ alternatif généré par la bobine d'induction (10a; 10b), comprenant au moins un élément de mise en forme de champ (16a; 16b) et une unité de réception de mise en forme de champ (18a; 18b) qui est prévue pour maintenir l'élément de mise en forme de champ (16a; 16b) dans et/ou sur l'unité de chauffage par induction (12a ; 12b), **caractérisé par** une unité de capteur électronique (20a ; 20b) qui est prévue pour détecter un type et/ou une position de l'élément de mise en forme de champ (16a; 16b) maintenu par l'unité de réception de mise en forme de champ (18a; 18b) dans et/ou sur l'unité de chauffage par induction (12a; 12b) et pour émettre un signal de mesure électronique,
et par une unité d'affichage (22a; 22b) qui est prévue pour émettre le type et/ou la position de l'élément de mise en forme de champ (16a; 16b) surveillé et/ou détecté par l'unité de capteur électronique (20a; 20b), où l'unité d'affichage (22a; 22b) présente au moins un élément de changement de couleur (26a; 26b),
où l'unité d'affichage (22a; 22b) est prévue pour afficher un écart par rapport à un type présélectionné de l'élément de mise en forme de champ (16b) et/ou un écart par rapport à une position présélectionnée de l'élément de mise en forme de champ (16a) au moyen d'un signal d'écart,
où l'unité d'affichage (22a; 22b) est prévue pour afficher un écart par rapport à un type présélectionné de l'élément de mise en forme de champ (16b) et/ou une coïncidence avec une position présélectionnée de l'élément de mise en forme de champ (16a) au moyen d'un signal de coïncidence, et où l'unité de capteur électronique (20a; 20b) est prévue pour surveiller un processus de réglage, en particulier manuel, influençant le type ou la position de l'élément de mise en forme de champ (16a; 16b) et pour émettre le signal d'écart ou le signal de coïncidence au moyen de l'élément de changement de couleur (26a; 26b) en fonction d'une coïncidence du type ou de la position de l'élément de mise en forme de champ (16a; 16b) avec la présélection.

2. Dispositif de réglage d'unités de chauffage par induction (44a; 44b) selon la revendication 1, **caractérisé en ce que** l'unité d'affichage (22a; 22b) présente au moins un élément lumineux (24a; 24b).

3. Dispositif de réglage d'unités de chauffage par induction (44a) selon l'une quelconque des revendications précédentes, **caractérisé en ce que** l'élément de mise en forme de champ (16a) forme au moins une partie d'un diaphragme d'iris (28a) avec une ouverture d'iris de taille variable (30a).

4. Dispositif de réglage d'unités de chauffage par induction (44b) selon l'une quelconque des revendications 1 ou 2, **caractérisé en ce que** l'élément de mise en forme de champ (16b) forme au moins une partie d'un disque interchangeable (32b) d'une pluralité de disques interchangeables (32b) pouvant être insérés de manière interchangeable dans l'unité de réception de mise en forme de champ (18b) et présentant respectivement une ouverture de taille différente (34b).

5. Dispositif de réglage d'unités de chauffage par induction (44a; 44b) selon l'une quelconque des revendications précédentes, **caractérisé en ce que** l'unité de capteur électronique (20a; 20b) comprend un potentiomètre (36a; 36b), en particulier pour une détection d'une position momentanée respective de l'élément de mise en forme de champ (16a) dans l'unité de réception de mise en forme de champ (18a) et/ou pour la détection d'un type d'élément de mise en forme de champ (16b) disposé momentanément dans l'unité de réception de mise en forme de champ (18b).

6. Dispositif de réglage d'unités de chauffage par induction (44b) selon la revendication 4, **caractérisé en ce que** l'unité de capteur électronique (20b) comprend une unité de mesure de résistance (38b) qui est prévue au moins pour détecter des résistances ohmiques caractéristiques qui sont associées aux disques interchangeables respectifs (32b), en particulier pour une détection d'un élément de mise en forme de champ (16b) disposé momentanément dans l'unité de réception de mise en forme de champ (18b).

7. Dispositif de réglage d'unités de chauffage par induction (44a; 44b) selon l'une quelconque des revendications précédentes, **caractérisé en ce que** l'unité de capteur électronique (20a; 20b) comprend un système émetteur-récepteur (40a; 40b), par exemple un système RFID, pour une identification sans contact de types d'éléments de mise en forme de champ (16b) et/ou pour une localisation sans contact de positions d'éléments de mise en forme de champ (16a).

8. Unité de chauffage par induction (12a; 12b) pour un système de serrage par contraction d'outil (42a; 42b), comprenant au moins une bobine d'induction (10a; 10b), comprenant au moins une unité de mise en forme de champ (14a; 14b), comprenant une unité de réception de mise en forme de champ (18a; 18b) et comprenant au moins un élément de mise en forme de champ (16a; 16b) disposé dans l'unité de réception de mise en forme de champ (18a; 18b) et/ou pouvant être disposé dans l'unité de réception de mise en forme de champ (18a; 18b) et comprenant un dispositif de réglage d'unités de chauffage par induction (44a; 44b) selon l'une quelconque des revendications précédentes.

9. Procédé de réglage pour un réglage d'au moins un élément de mise en forme de champ (16a; 16b) d'une unité de chauffage par induction (12a; 12b) qui est prévu pour mettre en forme et/ou protéger un champ magnétique d'induction d'une bobine d'induction (10a; 10b) de l'unité de chauffage par induction (12a; 12b), en particulier au moyen d'un dispositif de réglage d'unités de chauffage par induction (44a; 44b) selon l'une quelconque des revendications 1 à 7, **caractérisé en ce qu'**un type et/ou une position de l'élément de mise en forme de champ (16a; 16b) dans une unité de réception de mise en forme de champ (18a; 18b) de l'unité de chauffage par induction (12a; 12b) est détecté électroniquement, où un positionnement momentané, en particulier variable manuellement, de l'élément de mise en forme de champ (16a) est surveillé, où le positionnement momentané de l'élément de mise en forme de champ (16a) est comparé à un positionnement par défaut de l'élément de mise en forme de champ (16a) et où un affichage d'un élément d'affichage individuel (46a) d'une unité d'affichage (22a) de l'unité de chauffage par induction (12a), lors d'une reconnaissance d'une coïncidence du positionnement momentané avec le positionnement par défaut, change d'une représentation d'un signal d'écart à une représentation d'un signal de coïncidence au moins de couleur différente du signal d'écart.
